# EUROPEAN PATENT SPECIFICATION

(11) **EP 3 378 901 B1**
(45) Date of publication and mention of the grant of the patent: **18.12.2019**
(21) Application number: 18162618.5
(22) Date of filing: 15.03.2013
(51) Int. Cl.: C09C 1/36, C09C 1/56, C09C 3/12, C09C 1/30, C08K 5/544, C09C 1/48, C09D 11/037, C09D 11/322, C09D 123/20, C09D 7/41, C09D 7/62, B82Y 30/00

(54) **SURFACE MODIFIED CARBON BLACK PIGMENT PARTICLES AND APPLICATION THEREOF**
OBERFLÄCHENMODIFIZIERTE RUSSPIGMENTPARTIKEL UND ANWENDUNG DAVON
PARTICULES DE PIGMENT NOIR CARBONE MODIFIÉES EN SURFACE ET SON APPLICATION

(30) Priority: 09.05.2012 US 201261644491 P
(43) Date of publication of application: 26.09.2018
(62) Divisional of application: 13716527.0
(73) Proprietor: Sun Chemical Corporation, Parsippany, NJ 07054-1285 (US)
(72) Inventor: VILNER, Stanislav, South Lebanon, OH Ohio 45065 (US); MERCHAK, Paul A., Loveland, OH Ohio 45140 (US)
(74) Representative: Carpmaels & Ransford LLP

(56) References cited:
- EP-A1- 2 289 972
- DE-A1-102008 020 440
- GB-A- 2 030 146
- US-A1- 2009 082 500

## Description

### FIELD OF THE INVENTION

The present invention relates generally to surface modified pigment particles, methods of their preparation, pigment dispersions made with the modified particles, and their application for making imaging fluids for electronic displays, color filters, liquid toners, inks including inkjet inks, coatings, paints, cosmetics, and plastics. In a preferred embodiment, it relates to color imaging fluids for electronic displays working on the principal of electrowetting or/and electrophoresis.

### BACKGROUND

Colloidal stability is a fundamental property of pigment dispersion that determines the particles' resistance to flocculation, aggregation, and sedimentation during preparation, storage and application of the pigment dispersion. In general, colloidal stability depends upon the balance of the repulsive and attractive forces that exist between particles as they approach one another in liquid media. If the particles have a mutual repulsion and resistance to gravitational forces, then the dispersion will typically remain relatively stable. However, if attractive forces prevail, then some instability mechanism will eventually take place, for example flocculation, aggregation, flotation, and sedimentation. As a result, the dispersion will become unusable. Moreover, colloidal stability determines essential properties of pigment dispersions such as coloristics, rheological behavior, mobility of pigment particles, and particle size distribution.

A number of techniques have been used in the art to improve the colloidal stability of pigment dispersions (*e.g*., see U.S. Pat. Nos. 6,113,680; 6,120,596; 7,855,829; 5,401,780; 5,482,547; U.S. Pat. Appl. Pub. Nos. US2011/0184096 and US2011/0184111; Juan et al., Dyes and Pigments 76: 463-469 (2008); Wen et al., Dyes and Pigments, 92: 554-562 (2011); and Wen et al., Dyes and Pigments 92: 548-553 (2011). A detailed review of methods for non-aqueous pigment dispersion stabilization can be found, *e.g.,* in U.S. Pat. No. 7,901,503. Exemplary of methods used to improve the colloidal stability of particle dispersions include: (1) physical adsorption of polymeric dispersants or vehicle, often in combination with a synergist (derivatives of organic pigments or dyes) to promote adsorption of polymer; (2) encapsulation of the pigment particles; and (3) chemical surface modification, which can include introduction on the surface of functional groups and/or polymeric or oligomeric chains.

Such modifications can have a negative effect on product performance. For example, dispersions made with prior art modified pigments often contain high molecular weight polymers, surfactants, inorganic materials and in many cases required the use of synergists and polymeric dispersants in the formulation. This creates significant limitations for application of those dispersions due to increased viscosity, low interfacial surface tension, and undesirable charge on pigment particle among others. Furthermore, there is a strong need for highly pure and stable non-aqueous specialty dispersions and imaging fluids with demanding requirements for electronics applications such as imaging fluids for electronic displays.

Thus, while the prior art provides methods for preparing modified pigments for improved colloidal dispersion and stability, there remains a need for modified pigments having improved performance properties, particularly in compositions such as imaging fluids for electronic displays and other electronic applications, thereby providing advantageous alternatives to previous modified pigments. There is a need in the art for long-term functioning fluids for use in electronic devices.

### SUMMARY OF THE INVENTION

The current invention provides a means for satisfying the need for long-term stability of pigment dispersions as well as long-term functioning fluids for use in electronic devices, particularly electronic devices working on the principal of electrowetting or/and electrophoresis.

Provided are surface modified pigment particles that include a surface functional group, such as a functional group **Q**, that can form a covalent bond or a hydrogen bond with a compound of Formula (1) or a partially or fully hydrolyzed and condensed compound of Formula (1). Functional group **Q** can be bonded to the pigment particle surface via a covalent bond (chemisorption), an ionic bond, hydrogen bond or irreversible adsorption. The compound of Formula (1) has the structure: 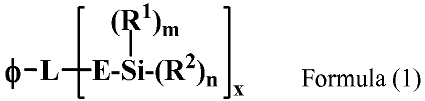 where **φ** is a linear, branched or dendritic polymeric chain having a molecular weight from about 100 to about 5,000,000, **L** is NR³C(O)NH, OC(O)NH, C(O)OCH₂CH(OH)CH₂, OCH₂CH(OH) CH₂, NHCH₂CH(OH)CH₂, alkylene, C(O)O, C(O)NR³, SO₂NR³, SO₂, NR³, =N-, ≡N⁺-, O or S, **E** is alkylene, arylene, alkylarylene, arylalkylene, alkyleneamino, alkyleneimino, alkyleneoxyalkylene, aryleneoxy, aryleneoxyalkylene, oxaalkylene, oxyalkylene, dioxyalkylene or oxyarylene; each **R¹** independently is H, hydroxyl, oxyalkyl, oxyalkylenearyl, halogen, acetate or amine, each **R²** independently is alkyl, cycloalkyl, cycloheteroalkyl, aryl or alkylenearyl, **R³** is H, alkyl, aryl or alkylaryl, **m** = 1 to 3, **n** = 0 to 2, **m+n** = 3 and **x** = 1 or 2.

The surface modified pigment particles also can include a surface functional group, such as a functional group **Q**, that can form a covalent bond or a hydrogen bond with a modifying compound **M**, which is a product formed by a full or partial hydrolysis of a compound of Formula (1). For example, a compound of Formula (1) can be fully or partially hydrolyzed resulting in a compound of Formula (1) where **R¹** is selected from among hydroxyl, H, oxyalkyl, oxyalkylenearyl, halogen, acetyl and amino, and the resulting modifying compound **M** can be bonded to the pigment particle surface via a covalent bond with a surface functional group, such as a functional group **Q** to form the group **-Q-M** on the pigment particle surface. One or more modifying compounds **M** can be bonded to the pigment particle surface via hydrogen bonds or covalent bonds or physical adsorption.

The pigment particle surface can contain a plurality of functional groups **Q** that can be the same or different. In some instances, the functional group **Q** is a hydroxyl, alkoxyl, phenolic, thiol, alkylenethiol and thiophenolic group, or a hydroxyl or thiol group that is attached to any aromatic, heteroaromatic, alicyclic or heterocyclic compound, or can be a functionality that can be reacted to form a hydroxyl, phenolic, thiol or thiophenolic group. As a simplified example, the moiety **-Q-M** on the pigment particle surface can have the following formula: 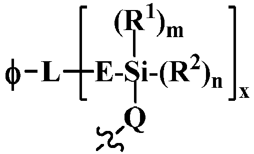 where **Q** is O, oxyalkylene, S, thioalkylene, oxyarylene, thioarylene, O-heteroarylene, S-heteroarylene, oxyheterocyclylene, thioheterocyclylene, oxyalicyclylene or thioalicyclylene; **m** is 1 or 2; **n** is 0 or 1; **m+n** = 2; **φ**, **L**, **E**, **R¹**, **R²**, and **x** are as defined above; and each **R¹** independently can interact with a different functional group **Q** on the pigment particle surface or with an **R¹** substituent of another modifying compound **M.** Modifying compound **M** can interact with two functional groups **Q** on the pigment particle surface to form, *e.g.,* the moiety **-Q-M-Q-** having one of the following formula or a combination thereof: 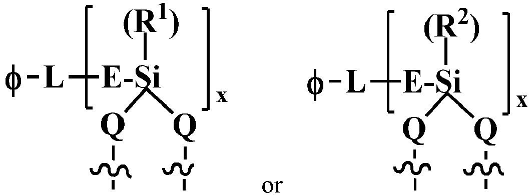 where each **Q** independently is O, oxyalkylene, S, thioalkylene, oxyarylene, thioarylene, oxyheterocyclylene, thioheterocyclylene, oxyalicyclylene or thioalicyclylene; **R¹** can interact with a different functional group **Q** on the pigment particle surface or with an **R¹** substituent of another modifying compound **M**; and **φ**, **L**, **E**, **R¹**, **R²** and **x** are as defined above. In some instances, at least two modifying compounds **M** can interact with each other and interact with different functional groups **Q** on the pigment particle surface to form, for example, the moiety **-Q-M-M-Q-.** The moiety **-Q-M-M-Q-** can have the following formula: 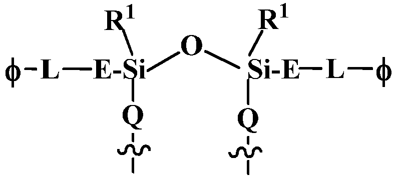 where each **Q** independently is O, oxyalkylene, S, thioalkylene, oxyarylene, thioarylene, oxyheterocyclylene, thioheterocyclylene, oxyalicyclylene or thioalicyclylene; **φ**, **L**, **E**, and **R¹** are as described above; and each **R**¹ can interact with a different functional group **Q** on the pigment particle surface or with an **R¹** substituent of another modifying compound **M.** The functional group **Q** can be attached to the pigment particle surface by a covalent, ionic or hydrogen bond, or can be attached to the pigment particle surface via irreversible adsorption onto the surface.

In the surface modified pigments provided herein, the polymer **φ** is selected to have a molecular weight in the range of from about 100 to about 5,000,000. Any polymer in this molecular weight range can be used. Exemplary polymers **φ** include a polyalkylene, polyoxyalkylene, polyimine, polyester, polyamide, polyimide, polyurethane, polyuria, polyacrylate, polyacrylonitrile, polysulfone, polystyrene, polyvinyl halogenide, polyvinylidene halogenides, polyvinyl alcohol, polyvinyl acetate, polyvinylpyrrolidone, polyvinyl butyral, polycarbonate, polyether sulfone, poly(arylene/alkylene) sulfide, polyepoxide, polyaldehyde, polyketone, polyether ketone, phenol-formaldehyde, polyethylene terephthalate, polybutylene terephthalate, hydrocarbon resin, and metalorganic polymer containing at least one atom of silicon and/or germanium and a random, block, dendritic, or combination co-polymer thereof. In some instance, polymer **φ** is selected from among polyethylene, polypropylene, polybutylene, polyisobutylene, polyisoprene, polyacetal, polyethylene glycol, polypropylene glycol, polybutylene glycol, polymethacrylate, polyalkyl/aryl acrylate, polyvinyl chloride, polyvinyl fluoride, polyvinyl bromine, polysiloxane; or a random, block, dendritic, or combination co-polymer thereof.

The compound of Formula (1) is the reaction product of a compound of Formula (2): 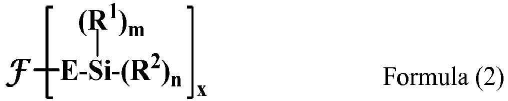 with a compound of formula (3) 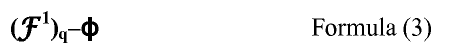 where 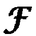 is selected from among -NCO, -NR⁴R⁵, -N⁺R⁴R⁵R⁶, -SO³⁻, -OH, -SH, R⁷, -COOH, -COR⁷, -SO₂R⁷, epoxy, acrylate and vinyl; 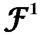 is selected from among -NCO, -NR⁴R⁵, -N⁺R⁴R⁵R⁶, -SO³⁻, -OH, -SH, R⁷, -COOH, -COR⁷, -SO₂R⁷, epoxy, acrylate and vinyl; **R⁴**, **R⁵** and **R⁶** each independently is H or alkyl; **R⁷** is F, Cl or Br; **q**=1 to 100; and **φ**, **E**, **R¹**, **R²**, **m**, **n** and **x** are as described above, where functional group 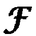 of the compound of Formula (2) can react with a functional group 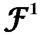 of the compound of formula (3).

In the surface modified pigment particles provided herein, particles of any carbon black or organic pigment or insoluble dye can be surface modified. Examples of such pigments include carbon black, any organic pigment related to a class of azo or azo condensed pigments, metal complexes, benzimidazolones, azomethines, methines, cyanines, azacarbocyanines, enamines, hemicyanines, streptocyanines, styryls, zeromethines, mono-, di-, tri-, and tetraazamethines, caratenoids, arylmethanes, diarylmethanes, triarylmethanes, xanthenes, thioxanthenes, flavanoids, stilbenes, coumarins, acridenes, fluorenes, fluorones, benzodifuranones, formazans, pyrazoles, thiazoles, azines, diazines, oxazines, dioxazines, triphenodioxazines, phenazines, thiazines, oxazones, indamines, nitroso, nitro, quinones, hydroquinones, naphthaquinones, anthraquinones, rhodamines, phthalocyanines, neutrocyanines, diazahemicyanines, porphirines, perinones, perylenes, pyronins, diketopyrrolopyrroles, indigo, indigoids, thioindigo, indophenols, naphthalimides, isoindolines, isoindolinones, iminoisoindolines, iminoisoindolinones, quinacridones, flavanthrones, indanthrones, anthrapyrimidines, quinophthalones, isoviolanthrones, pyranthrones, and any combination thereof.

In some instances the pigment comprises a vat or disperse dye or insoluble salt or complex of acid, direct, reactive, mordant, solvent, natural, basic (cationic), sulfur, fluorescent, or optical brightener, a mixture of organic pigment, inorganic pigment or extenders or solid solutions thereof, shell type pigments with inorganic nuclei covered with organic shell, or dispersed polymer particles or any combination thereof.

In some instances, the pigment is selected from among carbon black, titanium dioxide, zinc oxide, silica, iron oxide, antimony yellow, lead chromate, lead chromate sulfate, lead molybdate, ultramarine blue, cobalt blue, manganese blue, chrome oxide green, hydrated chrome oxide green, cobalt green, metal sulfides, cadmium sulfoselenides, zinc ferrite, bismuth vanadate, and derivatives and any combinations thereof. In some instances, the pigment is selected from among C.I. Pigment Black 6, 7, 9, 11, 12, 14, 15, 22, 26, 27, 28, 29, 30, 33, 34 and 35; C.I. Pigment Green 18, 20, 21, and 22; C.I. Pigment Blue 27, 30, and 73; C.I. Pigment Red 265 and 275; C.I. Pigment Yellow 38, 40, 53, 119, 157,158, 160, 161, 162, and 184; C.I. Pigment White 4, 5, 6, 6:1, 7, 8, 9, 10, 12, 13, 14, 15, 18, 18:1, 19, 21, 22, 23, 24, 25, 26, 27, 28, 32, 33, and 36 and any combination thereof. In some instances, the pigment is C.I. Pigment Black 7. The pigment also can be a mixture of two or more organic pigments, carbon black and/or inorganic pigments, dyes, solid solution or product of reaction thereof. The pigment also can be a near infra-red (NIR) reflecting or NIR transmissive pigment or a mixture of two or more NIR reflecting or NIR transmissive inorganic and/or organic pigments, dyes, solid solution or product of reaction thereof. The pigment also can be a black colorant, such as a black pigment or black dye or combination thereof.

In the surface modified pigment particles provided herein, the modifying compound **M** can be present in an amount of from at or about 0.1% to at or about 95% based on the weight of the surface modified particles. The size of the pigment particles can vary, and generally the pigment particles have a mean weight diameter of from 10 nm to 5 µm.

Also provided herein is pigment dispersion composition that includes the surface modified pigment particles provided herein and one or more of a polar solvents or one or more non-polar solvents. The pigment dispersion compositions also can include optional ingredients, such as additional organic pigment, inorganic pigment, surfactant, synergist, additive for electrical conductivity control, polymeric dispersant, plasticizer, resin, defoamer and charge director and any combination thereof. If present, the additional organic pigment or inorganic pigment or both can contain one or more ionic, nonionic, or polymeric groups or combination thereof attached to a surface of the additional organic pigment or the inorganic pigment.

When present in the dispersion composition, the polar solvent can include any polar solvent known in the art. Examples of polar solvents include water, a glycol, a polyglycol, an alcohol, a polyol, an ether, an ester, a ketone, a lactam, a pyrrolidone, a carbonate, a sulfone, a sulfoxide, an amide, a heterocyclic amine, a nitrile, an aliphatic acid acetal, a carbamate, an aldehyde and a chlorinated hydrocarbon and any combination thereof. The polar solvent can include a combination of functions selected from among alcohol, ketone, ether, ester, amine, nitrile, amide, sulfoxide, carboxylic acid, aldehyde and halogen. For example, the polar solvent can include a combination of alcohol and ketone, or ether and ester and ketone, or amine and alcohol and halogen.

In some instances, the polar solvent is selected from among water, ethylene glycol, 1,2-propylene glycol, 1,3-propylene glycol, 1,4-butylene glycol, diethylene glycol, dipropylene glycol, glycerin, ethylene carbonate, propylene carbonate, 1,2-butylene carbonate, 1,2- cyclohexane carbonate, glycerin carbonate, dimethyl carbonate, diethyl carbonate, acetophenone, pyridine, dimethyl malonate, diacetone alcohol, hydroxypropyl carbamate, beta-hydroxy-ethyl carbamate, N-methyl formamide, N-methyl acetamide, dimethylsulfoxide, sulfolane, 2-pyrrolidone, N-methyl-2-pyrrolidone, N-cyclohexyl-2-pyrrolidone, acetonyl acetone, cyclohexanone, ethyl acetoacetate, ethyl-L-lactate, pyrrole, N-methyl pyrrole, N-ethyl pyrrole, 4*H*-pyran-4-one, 1,3-dimethyl-2-imidazolidinone, morpholine, N-methyl-morpholine, N-ethyl-morpholine, N-formylmorpholine, beta-propiolactone, beta-valerolactone, beta-hexa-lactone, gamma-butyrolactone, gamma-valerorolactone, gamma-hexalactone, gamma-heptalactone, gamma-octalactone, gamma-nonalactone, gamma-decalactone, delta-valerolactone, delta-hexalactone, delta-heptalactone, delta-octalactone, delta-nonalactone, delta-decalactone, delta-tetradecalactone and delta-octadecolactone and any combination thereof.

When present in the dispersion, any non-polar solvent can be selected. The non-polar solvent can be selected from among one or a combination of non-substituted, substituted, linear, branched and cyclic compounds including one or more silicon and/or germanium atoms, aliphatic or aromatic hydrocarbons, partially hydrogenated aromatic hydrocarbons, alicyclic or aromatic heterocyclic compounds and derivatives thereof containing a halogen, nitro, nitroso, epoxy, phosphate, or cyano group; fatty alcohols and carboxylic acids, and ethers, esters, and amides thereof. Examples of non-polar solvent include decane, dodecane, tetradecane, cyclohexane, decalin, tetralin, octadecanol, a silicone oil, a linear siloxane, a cyclic siloxane, a branched aliphatic hydrocarbon, a petroleum solvent, kerosene, a mineral spirit, tetradecane epoxide and fluorinated hydrocarbons and combinations thereof.

The amount of surface modified pigment in the dispersion composition can vary. Generally, the amount of surface modified pigment is in the amount of from 1% to 60%, or from 5% to 30%, based on the weight of the dispersion composition. The viscosity of the dispersion can be adjusted in order to have the desired rheology of a selected application. Generally, the dispersion compositions provided herein have a dynamic viscosity of from at or about 0.5 cP to at or about 2,000 cP, or from about 1 cPs to about 500 cPs, or from about 1 cPs to 100 cPs, at 25°C at a rotational speed of 30 rpm using a Brookfield Viscometer LVDV- II + Pro using the appropriate spindle. The pigment dispersions provided herein exhibit no significant change in particle size distribution or viscosity after storage at 80°C for at least 7 days.

Also provided are methods of preparing surface modified pigment particles. The methods include as steps synthesizing a compound of Formula (1) by reacting a compound of Formula (2) with a compound of Formula (3); treating the pigment particles with the compound of formula (1) to form a surface treated pigment; and isolating the surface treated pigment by: (i) filtration to form a press-cake and drying the press-cake or (ii) direct drying of the surface treated pigment without filtration. The pigments can be treated with the compound of Formula (1) at a temperature in the range of 0°C to 200°C for a period of time of from 0.5 hours to 24 hours with or without pigment milling. In some instances, the pigment particles are larger than desired, and pigment milling can be performed to reduce the size of the pigment particles. The methods also can include an optional purifying step to purify the pigment. The pigment can be purified before or after surface treatment in order to remove impurities. The purifying step can include extraction, sublimation, centrifugation, distillation, re-crystallization, fractional crystallization, ultrafiltration or reverse osmosis or any combination thereof.

The surface modified pigment particles or a dispersion thereof as provided herein can be used in any application in which pigments are used. For example, surface modified pigment particles or a dispersion thereof as provided herein can be used to prepare a color imaging fluid for an electronic display, a color filter, a liquid toner, an ink, including an inkjet ink, an aerosol ink, a coating, a paint, a cosmetic or a plastic.

Also provided are color imaging fluids for electrowetting and/or electrophoresis electronic displays. The fluids include the surface modified pigment particles provided herein, or a dispersion of the surface modified pigments as described herein, where the amount of surface modified pigment particles is in the range of at or about 0.01% to at or about 30% by weight of the color imaging fluid, or in the range of at or about 0.2% to at or about 20% by weight of the color imaging fluid. For these applications, the surface modified pigment particles can have a mean weight diameter of from at or about 10 nm to at or about 5 µm, or from at or about 20 nm to at or about 500 nm, or from at or about 30 nm to at or about 300 nm. Generally, the color imaging fluids provided herein have a dynamic viscosity of from at or about 0.5 cP to at or about 2,000 cP, or from about 1 cPs to about 500 cPs, or from about 1 cPs to 100 cPs, at 25°C at a rotational speed of 30 rpm using a Brookfield Viscometer LVDV- II + Pro using the appropriate spindle. The color imaging fluids provided herein exhibit no significant change in particle size distribution or viscosity after storage at 80°C for at least 7 days. Also provided are electronic displays and other electronic devices that operate by principles of electrowetting, electrofluidics, and/or electrophoresis, where the devices contain the surface modified pigment particles or the color imaging fluids provided herein.

### DETAILED DESCRIPTION OF THE INVENTION

It is to be understood that the foregoing general description and the following detailed description are exemplary and explanatory only and are not restrictive of any subject matter claimed.

The section headings used herein are for organizational purposes only and are not to be construed as limiting the subject matter described.

### I. DEFINITIONS

Unless defined otherwise, all technical and scientific terms used herein have the same meaning as is commonly understood by one of skill in the art to which the inventions belong. All patents, patent applications, published applications and publications, websites and other published materials referred to throughout the entire disclosure herein, unless noted otherwise, are incorporated by reference in their entirety for any purpose.

In this application, the use of the singular includes the plural unless specifically stated otherwise. In this application, the use of "or" means "and/or" unless stated otherwise.

As used herein, the singular forms "a", "an" and "the" are intended to include the plural forms as well, unless the context clearly indicates otherwise.

As used herein, the terms "comprises" and/or "comprising," specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "composed", "comprised" or variants thereof are used in either the detailed description or the claims, such terms are intended to be inclusive in a manner similar to the term "comprising."

As used herein, ranges and amounts can be expressed as "about" a particular value or range. "About" is intended to also include the exact amount. Hence "about 5 percent" means "about 5 percent" and also "5 percent." "About" means within typical experimental error for the application or purpose intended.

As used herein, "optional" or "optionally" means that the subsequently described event or circumstance does or does not occur, and that the description includes instances where said event or circumstance occurs and instances where it does not. For example, an optional component in a system means that the component may be present or may not be present in the system.

As used herein, "monomer" refers to a material having a viscosity less than that of an oligomer and a relatively low molecular weight (i.e., having a molecular weight less than about 750 g/mole) and containing one or more polymerizable groups, which are capable of polymerizing and combining with other monomers or oligomers to form other oligomers or polymers.

As used herein, "oligomer" refers to a material having a viscosity greater than that of a monomer and a relatively intermediate molecular weight (i.e., having a molecular weight greater than about 750 g/mole but generally less than 10,000 g/mole) having one or more polymerizable groups, which are capable of polymerizing and combining with monomers or oligomers to form other oligomers or polymers.

As used herein, "polymer" refers to a molecule that includes a substructure formed from one or more monomeric, oligomeric, and/or polymeric constituents polymerized or cross-linked together. The monomer and/or oligomer units can be regularly or irregularly arranged and a portion of the polymer chemical structure can include repeating units.

As used herein, a "dendritic polymeric chain" refers to a broad class of branched macromolecular polymer structures having a regularly repeated branching structure or having an irregularly repeated branching structure or a combination thereof. Examples include dendrimer polymers, linear/dendritic hybrid polymers, dendronizcd polymers, dendri-grafted polymers, hyperbranched polymers, multi-arm star polymers, arboreal polymers, polymer brushes, and hyper-grafted polymers. The dendritic polymeric chain can be symmetric or asymmetric. Dendrimer polymers typically have a regularly repeated branching structure, while hyperbranched polymers have an irregularly repeated branching structure. Dendrimer polymers typically include branches extending from other branches, like a tree, instead of linear branches extending from a well-defined backbone segment, and typically include a relatively high level of branching (see U.S. Pat. No. 7,585,933 and U.S. Pat. Pub. No. 2011/0111951). Dendritic polymeric chains can have a structure in which the polymer chains are dendritically branched from one focal point, or a structure in which polymer chains are radiated from a plurality of focal points linked to a molecule serving as a backbone or core.

As used herein, "molecular weight" means number average molecular weight unless expressly noted otherwise.

As used herein, "excellent stability" with reference to dispersions refers to a permanence of the essential dispersion properties, such as particle size distribution, viscosity, rheological behavior, and color.

As used herein, "aliphatic" refers to hydrocarbyl organic compounds or groups characterized by a straight, branched or cyclic arrangement of the constituent carbon atoms and an absence of aromatic unsaturation. Aliphatics include, without limitation, alkyl, alkylene, alkenyl, alkenylene, alkynyl and alkynylene. Aliphatic groups typically have from 1 to 20 carbon atoms. Aliphatics include saturated and unsaturated compounds.

As used herein, a numerical range such as "1 to 20" refers to each integer in the given range; *e.g.,* "1 to 20 carbon atoms" means that an alkyl group can contain only 1 carbon atom, 2 carbon atoms, 3 carbon atoms, *etc.,* up to and including 20 carbon atoms.

As used herein, "alicyclic compound" refers to an organic compound containing a ring system but that is not aromatic. The ring system can contain one or more rings where at least one ring is aliphatic. Alicyclic compounds include rings having any degree of saturation. Exemplary alicyclic compounds include rings having from about 4 to about 12 carbon atoms in the ring.

As used herein, "alicyclylene" refers to a divalent alicyclic radical.

As used herein, "alkoxy" refers to the monovalent radical alkyl-O- where the alkyl group is as described below. Examples include methoxy, ethoxy, *n*-propoxy, *iso*-propoxy, *n*-butoxy, *tert*-butoxy, *sec*-butoxy, *n*-pentoxy, *n*-hexoxy and 1,2-dimethylbutoxy.

As used herein, "alkyl" by itself or as part of another substituent refers to a monovalent saturated aliphatic hydrocarbyl radical having up to about 40 carbon atoms, usually 1 to 20 carbon atoms, or 1 to 10 carbon atoms, that is derived by the removal of one hydrogen atom from a single carbon atom of a parent alkane. By way of example only, "C₁-C₄ alkyl" indicates an alkyl having one, two, three, or four carbon atoms, *i.e.,* the alkyl is selected from among methyl, ethyl, propyl, iso-propyl, *n*-butyl, iso-butyl, *sec-*butyl and *t*-butyl. Thus "C₁ - C₄" includes C₁ - C₂, C₁ - C₃, C₂ - C₃ and C₂ - C₄ alkyl. The hydrocarbon chain may be either straight or branched. This term is exemplified by groups such as methyl, ethyl, *n*-propyl, isopropyl, *n*-butyl, iso-butyl, *tert*-butyl, *n*-hexyl, *n-*octyl and *tert*-octyl.

As used herein, "alkylene" by itself or as part of another substituent refers to a divalent saturated alkyldiyl group having two terminal monovalent radical centers derived by the removal of one hydrogen atom from each of the two terminal carbon atoms of the straight-chain or branched parent alkane. The alkylene can be straight-chained or branched. Examples of alkylene groups include methylene (-CH₂-), ethylene (-CH₂CH₂-), and propylene (-CH₂CH₂CH₂- and -CH(CH₃)CH₂-).

As used herein, "alkylamine" alone or in combination, refers to an alkyl group that is covalently joined to an amine group.

As used herein, "alkylenearyl" refers to a divalent radical -alkylene-aryl-, where an alkylene group is covalently joined to an aryl group.

As used herein, "alkylimine" alone or in combination, refers to an alkyl group that is covalently joined to an imine group.

As used herein, "alkylamino" refers to a monovalent radical -alkyl-NR^{a}R^{b}, where each of R^{a} and R^{b} independently is selected from hydrogen and alkyl and alkyl is as defined above.

As used herein, "alkyleneamino" refers to a divalent radical -alkyl-NR^{a}-, where R^{a} can be hydrogen or alkyl and alkyl is as defined above.

As used herein, "alkylimino" refers to a divalent radical alkyl-N=, where alkyl is as defined above.

As used herein, "alkyleneimino" refers to a divalent radical -alkyl-N=, where alkyl is as defined above.

As used herein, "alkyleneoxy" refers to a divalent radical -alkylene-O-, where alkylene is as defined above.

As used herein, "alkoxyalkyl" refers to a moiety having two alkyl groups as defined herein tethered together via an oxygen bond. Exemplary alkoxyalkyl groups include polyoxyalkylenes, such as polyethyleneoxides, that are terminated with an alkyl group, such as a methyl group.

As used herein, "alkylthio" refers to a radical -S-alkyl. Representative examples include, but are not limited to, methylthio, ethylthio, propylthio and butylthio.

As used herein, "amide" refers to the radical-C(O)NH₂.

As used herein, "amino" refers to the radical -NR^{h}R^{h}, where each R^{h} independently is selected from among hydrogen, alkyl, cycloalkyl, aryl, heteroaryl, and heterocyclyl and where each of alkyl, cycloalkyl, aryl, heteroaryl and heterocyclyl is as described herein.

As used herein, "aryl" by itself or as part of another substituent refers to a monovalent aromatic monocyclic, bicyclic or polycyclic (3 or more rings) hydrocarbon radical that contains no ring heteroatoms derived by the removal of one hydrogen atom from a single carbon atom of a parent aromatic ring system. Where the systems are not monocyclic, the term aryl includes for each additional ring the saturated form (perhydro form) or the partially unsaturated form (for example the dihydro form or tetrahydro form) or the maximally unsaturated (nonaromatic) form. In some instances, the term aryl refers to bicyclic radicals in which the two rings are aromatic and bicyclic radicals in which only one ring is aromatic. Examples of aryl include phenyl, naphthyl, anthracyl, indanyl, 1,2-dihydro-naphthyl, 1,4-dihydronaphthyl, indenyl, 1,4-naphthoquinonyl and 1,2,3,4-tetrahydronaphthyl, as well as groups derived from aceanthrylene, acenaphthylene, acephenanthrylene, anthracene, azulene, benzene, chrysene, coronene, fluoranthene, fluorene, hexacene, hexaphene, hexylene, as-indacene, s-indacene, indane, indene, naphthalene, octacene, octaphene, octalene, ovalene, penta-2,4-diene, pentacene, pentalene, pentaphene, perylene, phenalene, phenanthrene, picene, pleiadene, pyrene, pyranthrene, rubicene, triphenylene and trinaphthalene. Particularly preferred aryls are phenyl and naphthyl.

Aryl groups can be formed by three, four, five, six, seven, eight, nine, or more than nine carbon atoms. In some instances, an aryl group can be a 3-, 4-, 5-, 6-, 7-, 8-, 9-, 10-, 11-, 12-, 13- or 14-membered, aromatic mono-, bi- or polycyclic system. In some instances, an aryl refers to an aromatic C₃-C₉ ring or an aromatic C₄-C₈ ring.

As used herein, "arylene" refers to a divalent aryl group radical derived by the removal of one hydrogen atom from two carbon atoms wherein the aryl group is as described above.

As used herein, "aryleneoxy" refers to a divalent radical of the structure -R^{h}-O-where R^{h} is an arylene group as described above.

As used herein, "alkylaryl" by itself or as part of another substituent, refers to an alkyl radical that is covalently joined to an aryl group. Exemplary alkylaryl groups include benzyl, phenethyl, phenopropyl, 1-benzylethyl, phenobutyl and 2-benzylpropyl. The alkyl group can be C₁-C₂₀ and the aryl moiety can be C₆-C₂₀.

As used herein, "alkylarylene" by itself or as part of another substituent, refers to a divalent radical -alkyl-arylene-containing an alkyl that is covalently joined to an aryl group.

As used herein, "alkoxyl" refers to a monovalent -alkyl-OH radical where alkyl is as defined herein.

As used herein, "alkylenethiol" refers to the monovalent radical -alkylene-SH where alkylene is as defined herein.

As used herein, "arylalkyl" refers to a monovalent radical formed between an alkyl radical as defined above, substituted with one or more aryl groups as defined above ,where the aralkyl group is attached through the alkyl radical.

As used herein, "arylalkylene" refers to a divalent radical -aryl-alkylene- formed between an aryl radical as defined above and an alkyl radical as defined above.

As used herein, "aryloxy" refers to a divalent -aryl-O- radical where aryl is as defined herein.

As used herein, "aryloxyalkyl" refers to a monovalent moiety having an aryl group and an alkyl group tethered together via an oxygen bond where the point of attachment is within the alkyl radical.

As used herein, "carboxy" and "carboxyl" refer to the radical -C(O)OH.

As used herein, "cyano" refers to the radical -CN.

As used herein, "cycloalkyl" by itself or as part of another substituent refers to a cyclic alkyl radical having from 3 to about 12 carbon atoms and having a single cyclic ring or multiple condensed rings, including fused and bridged ring systems. Cycloalkyls can be formed by three, four, five, six, seven, eight, nine, or more than nine carbon atoms. In some instances, the ring system includes 3 to 12 carbon atoms. In some instances, the ring system includes 3 to 6 carbon atoms.

As used herein, "cycloalkylene" refers to a cyclic divalent alkylene.

As used herein, "cycloheteroalkyl" by itself or as part of another substituent refers to a stable heterocyclic non-aromatic ring and fused rings containing one or more heteroatoms independently selected from N, O, P, Si and S. A fused heterocyclic ring system can include carbocyclic rings and need only include one heterocyclic ring. Examples of heterocyclic rings include, but are not limited to, piperazinyl, homopiperazinyl, piperidinyl and morpholinyl.

As used herein, "epoxy" refers to compounds in which an oxygen atom is directly attached to two adjacent carbon atoms already attached in some other way, such as in a carbon chain or ring system. An example is a cyclic ether containing a 3-membered ring consisting of one oxygen atom and two carbon atoms (oxirane).

As used herein, "ester" refers to the group -C(=O)OR^{C} where R^{C} can be selected from among alkyl, cycloalkyl, aryl, heteroaryl and heterocyclyl.

As used herein, "hetero" when used to describe a compound or a group means that one or more carbon atoms in the compound or group have been replaced by a heteroatom, such as N, O, P, Si or S. Hetero can be applied to any of the hydrocarbyl groups described above such as, *e.g*., heteroalkyl, cycloheteroalkyl and heteroaryl, and can have from 1 to 5 heteroatoms.

As used herein, "heteroatom" refers to any atom that is not carbon. Examples include B, N, O, P, Se, Si and S.

As used herein, "heterocycle" refers to a closed ring hydrocarbon in which one or more than one of the atoms in the ring is an element other than carbon (*e.g.,* B, N, O, P, Se, Si or S) and includes aromatic (heteroaryls) and non-aromatic (cycloheteroalkyl) rings and systems.

As used herein, "heteroaryl" refers to a monovalent heteroaromatic group radical derived by the removal of a hydrogen atom from an atom of a parent heteroaromatic ring system. The heteroaryl group can be attached through a C or heteroatom bond. Typical heteroaryl groups include, but are not limited to, groups derived from arsindole, benzene, benzothiophene, benzo[c]thiophene, benzimidazole, benzoxazole, benzisoxazole, benzothiazole, carbazole, β-carboline, chromane, chromene, cinnoline, furan, imidazole, indazole, indole, indoline, indolizine, isobenzofuran, isochromene, isoindole, isoindoline, isoquinoline, isothiazole, isoxazole, oxadiazole, oxazole, perimidine, phenanthridine, phenanthroline, phenazine, phthalazine, pteridine, purine, pyran, pyrazine, pyrazole, pyrazine, pyridazine, pyridine, pyrimidine, pyrrole, pyrrolizine, purine quinazoline, quinoline, quinolizine, quinoxaline, tetrazole, thiadiazole, thiazole, thiophene, triazole, [2,4,6]triazine and xanthene, as well as fused ring systems such as acridine, anthracene, cinnoline, naphthalene, naphthyridine, quinoline, isoquinoline, quinoxaline and quinazoline. In some embodiments, the heteroaryl groups are those derived from thiazole, thiophen, pyrrole, benzothiophene, benzofuran, indole, pyridine, quinoline, imidazole, oxazole and pyrazine.

As used herein, "heteroarylene" refers to a divalent heteroaromatic group radical derived by the removal of two hydrogen atoms from an atom of a parent heteroaromatic ring system, containing at least one heteroatom.

As used herein, "heterocyclic" or "heterocyclyl" refers to a monovalent radical mono-, or poly-cyclic ring system that includes at least one heteroatom and is unsaturated, partially saturated or fully saturated. Heterocyclic includes fused ring systems where one or more of the fused rings contain no heteroatoms. Examples of heterocyclic groups include, *e.g*., pyrrolidinyl, pyrazolinyl, pyrazolidinyl, imidazolinyl, imidazolidinyl, piperidinyl, piperazinyl, oxazolidinyl, isoxazolidinyl, morpholinyl, thiazolidinyl, isothiazolidinyl, quinoxalinyl, pyridazinonyl and tetrahydrofuryl. One having ordinary skill in the art will recognize that the maximum number of heteroatoms in a stable, chemically feasible heterocyclic ring, whether it is aromatic or non-aromatic, is determined by the size of the ring, the degree of unsaturation and the valence of the heteroatoms. In general, a heterocyclic ring may have one to four heteroatoms so long as the heteroaromatic ring is chemically feasible and stable.

As used herein, "heterocyclylene" refers to a divalent heterocyclyl group where the heterocyclyl group is as described above.

As used herein, "heteroarylene" refers to a divalent heteroaryl group where the heteroaryl group is as described above.

As used herein, "hydroxyl" refers to the radical -OH.

As used herein, "hydroxyalkyl" by itself or as part of another substituent refers to an alkyl group in which one or more of the hydrogen atoms are replaced with a hydroxyl substituent. Thus, the term "hydroxyalkyl" includes monohydroxyalkyls, dihydroxyalkyls and trihydroxyalkyls.

As used herein, "nitroso" refers to the radical -NO.

As used herein, "oxaalkylene" refers to an divalent alkylene group as defined above where one or more non-adjacent -CH₂- groups have been substituted with a catenary oxygen atom, such as -CH₂CH₂OCH(CH₃)CH₂-.

As used herein, "oxyalicyclylene" refers to a divalent radical of the structure -O-R^{d}-, where R^{d} is an alicyclylene as defined above.

As used herein, "oxyalkyl" refers to a monovalent radical of the structure -O-alkyl, where alkyl is as defined above.

As used herein, "oxyalkylene" refers to a divalent radical of the structure -O-R^{e}-, where R^{e} is an alkylene as defined above. Examples of oxyalkylenes include, but are not limited to -O-CH₂-, -O-CH₂-CH₂- and -O-C₃H₆-.

As used herein, "dioxyalkylene" refers to a divalent radical of the structure -O-R^{e}-O-, where R^{e} is an alkylene as defined above. Examples of dioxyalkylenes include, but are not limited to -O-CH₂-O-,-O-CH₂CH₂-O- and -OC₃H₆-O)-.

As used herein, "oxyalkylenearyl" refers to a monovalent radical of the structure -O-R^{e}R^{h}, where R^{e} is an alkylene as defined above and R^{h} is an aryl as defined above.

As used herein, "oxyarylene" refers to a divalent radical of the structure -O-R^{f}-, where R^{f} is an arylene as defined above.

As used herein, "oxyheterocyclylene" refers to a divalent radical of the structure -O-R^{G}-, where R^{G} is a heterocyclylene group as described above.

As used herein, "phenolic group" refers to the group

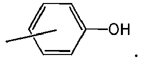

As used herein, "phenyl" refers to the aryl form of benzene and has the formula -C₆H₅, where the six carbon atoms are arranged in an aromatic ring structure.

As used herein, "sulfonyl" refers to the divalent radical -S(O₂)-.

As used herein, "thiol" refers to the monovalent radical -SH.

As used herein, "thioalicyclylene" refers to a divalent radical of the structure -S-R^{d}-, where R^{d} is an alicyclylene as defined above.

As used herein, "thioalkyl" refers to the monovalent radical -S-alkyl where alkyl is as defined above.

As used herein, "thioalkylene" refers to a divalent radical of the structure -S-R^{e}-, where R^{e} is an alkylene as defined above.

As used herein, "thioarylene" refers to a divalent radical of the structure -S-R^{f}-, where R^{f} is an arylene as defined above.

As used herein, "thioheterocyclylene" refers to a divalent radical of the structure -S-R^{G}-, where R^{G} is a heterocyclylene group as described above.

As used herein, "thiophenolic group" refers to the group

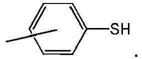

As used herein, "vinyl" refers to the monovalent radical -CH=CH₂.

As used herein, the phrase "no significant change" means that the change of the parameter mentioned is within 7% to 10% of the original measurement of the parameter, such as particle size and viscosity.

Throughout this disclosure, all parts and percentages are by weight (wt% or mass% based on the total weight; parts by weight) and all temperatures are in °C, unless otherwise indicated.

### II. SURFACE MODIFICATION OF PIGMENTS

The treatment of inorganic materials including inorganic pigments with organosilicon compounds is well known (see, *e.g.,* Arkles, Hydrophobicity, Hydrophilicity and Silane Surface Modification (2006) and Arkles, Hydrophobicity, Hydrophilicity and Silane Surface Modification Version 2.0 (2011), brochures available from Gelest, Inc., Morrisville, PA). The surface of those materials is highly polar due to polar functional groups, and specifically hydroxyl groups that can easily react with various silicon modifiers forming covalent bonds. It also is well known that a vast majority of organic pigments lack surface polar groups, and modification of organic pigments with silicon compounds is very often inefficient due to low adsorption energy of those compounds on the pigment particle surface. Some inorganic pigments are known to be particularly difficult to surface-modify. For example, even when some functional groups are present on the surface of carbon black, silanization of this material is notoriously inefficient.

Analysis of prior art demonstrates that a number of general methods have been used for modification of organic pigments and carbon black with silicone and siliconorganic compounds. These include physical adsorption of surfactants/polymers; microencapsulation; deposition of inorganic oxides, for example silica and aluminum oxide, on the surface of organic pigments followed by physical adsorption or chemisorption of modifier/coupling agent/polymer; or combinations of these methods.

U.S. Pat. No. 6,113,680 describes physical adsorption organoalkoxysilanes, organosilanes, and acetoalkoxyaluminum diisopropylates onto organic pigments to make the surface of the organic pigments uniformly hydrophobic. The polymer is formed on the surface through hydrolysis and polymerization of monomers.

A similar approach is proposed in U.S. Pat. No. 6,120,596 for organic pigment modification with hydrolyzable halosilanes, organohalosilane, and titanium tetrachloride to improve pigment dispersibility in various solvent media.

In U.S. Pat. No. 7,855,829, encapsulated organic pigments are described. The encapsulated organic pigments are intended for electrophoretic displays and are made by precipitation of co-polymer with relatively high molecular weight on the pigment particle surface. The polymer is pre-made by polymerization of three oligomers, two of which are organosilicones.

In U.S. Pat. Nos. 5,401,780 and 5,482,547, the surface of organic pigments is treated first with hydrolyzable compounds of Ti, Sn, or Zr to deposit relevant oxide on the pigment particle surface, and then the pigments is treated with reactive silanes. In the case of U.S. Pat. No. 5,401,780, the reactive silane is methacryloxypropyltrimethoxysilane that reacts with other acrylic monomers to encapsulate the pigment particles. In the case of U.S. Pat. No. 5,482,547, hydrolyzable silanes form covalent bonds to the oxide on the pigment particle surface and polymerize on the pigment particle surface.

In U. S. Pat. Appl. Pub. No. US2011/0184096, a sol-gel process is utilized to deposit silica on the surface of organic pigments following the polymerization of various acrylic monomers. Both the bonds between silica and pigment, and the bonds between polymer and silica, are assumed to be non-covalent ones.

U. S. Pat. Appl. Pub. No. US2011/0184111 also purportedly describes modification of organic and inorganic pigments with silica; however, the application assumes the bond between the pigment particle surface and the oxide is a covalent bond. In the case of inorganic pigments, it might be justified, but it is not likely for organic pigments.

Deposition of oxides on the surface of organic pigments in order to improve pigment dispersibility, heat resistance, light fastness, and other properties, also is described in the prior art. For example, Juan *et al.* describes coating Pigment Yellow 12 (CI: PY 12 / CAS No.: 6358-85-6) by nano-silica particles using layer-by-layer self-assembly technique [Juan et al., Dyes and Pigments 76: 463-469 (2008). Methods of treating pigments for use in electronic displays also are known in the art. For example, Wen *et al.* describes preparation of Pigment Yellow 13 (C.I. PY13 / CAS No. 5102-83-0), Pigment Red 254 (P.I. PR 254 / CAS No. 84632-65-5), and phthalocyanine blue 15:3 (C.I. PB 15:3 / CAS No. 147-14-8) for electrophoretic displays by treating the named pigments with sodium silicate to deposit silica on the pigment particle surface followed by reaction with aminopropyltriethoxysilane [Zi-Qiang Wen et al., Dyes and Pigments 92: 554-562 (2011)]. Deposition of aluminum oxide on Pigment Yellow 3 (C.I. PY 3 / CAS No. 6486-23-3) is described in H. Wen et al., Dyes and Pigments, 92: 548-553 (2011).

Such modifications can impact the properties of the pigments and the resulting dispersions. For example, for some of the prior art modified pigments, dispersion may require use of synergists and polymeric dispersants, while colloidal stability often can be achieved only in the presence of high molecular weight polymers, surfactants or inorganic materials or combinations thereof. The presence of these additional materials can impact performance. For example, high molecular weight polymers or surfactants can increase the viscosity of the dispersion or otherwise modify the rheological properties of the dispersion. The presence of surfactants also can modulate interfacial surface tension. Further, some of the materials used in prior art modified pigment dispersions can result in an undesirable charge on the pigment particles, which could limit the application of such dispersions in electronic applications, such as electronic displays or other devices working on the principle of electrowetting and/or electrophoresis.

Provided herein are surface modified pigment particles, *e.g*., particles of organic and inorganic pigment and carbon black. Also provided are methods of surface modification of pigment particles. In some instances, the disclosed methods of modification of the surface of pigment particles allows forming covalent bonds between silicon atoms of the modifying polymer and surface hydroxyl groups of the pigment particles. Also provided are dispersions comprising the modified pigment provided herein. The dispersions of surface modified pigment particles can be used for preparation of imaging fluids for electrowetting, electrofluidic or electrophoretic devices as well as for inks, including inkjet inks and aerosol inks, coatings, paints, toners, color filters, cosmetics and plastics. Also provided are imaging fluids containing the surface modified pigment particles provided herein. Also provided are electrowetting, electrofluidic, or electrophoretic devices or other articles that include the surface modified pigment particles or the imaging fluid provided herein.

### III. SURFACE-MODIFIED PIGMENT PARTICLES

Provided herein are surface-modified pigment particles, such as particles of organic or inorganic pigment or carbon black. The modified particles can be obtained by direct chemisorption of a modifier compound containing Si atoms with the surface of the pigment particles. The surface-modified particles also can include covalent bonds between silicon atoms of the modifying compound and surface functional groups, such as hydroxyl groups, of the pigment particles, such as organic or inorganic pigment or carbon black. Dispersions made with surface modified pigments provided herein demonstrate excellent stability in a wide range of solvents generally without utilizing additional polymeric dispersants, synergists, and surfactants, and thus, the surface modified pigments provided herein actually can be self-dispersing pigments. The surface modified pigments provided herein are especially useful for imaging fluids for electronic displays, color filters, liquid toners, inks including inkjet inks and aerosol inks, coatings, paints, cosmetics and plastics, providing excellent color and rheological properties, improved functionality and durability of electronic devices due to the non-ionic mechanism of dispersion stabilization of the surface modified pigments in both polar and non-polar media. In some instances, the surface-modified pigments include a compound of Formula (1) on the surface of the pigment. In some instances, the surface-modified pigments include a modifying compound **M** on the surface of the pigment.

### A. Modifying Compound M

The surface modified pigment particles can include a modifying compound **M**. The modifying compound **M** provided herein is a product formed by the full or partial hydrolysis of one or more compounds of Formula (1): 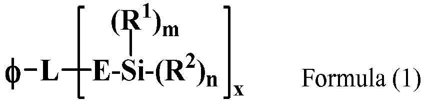 where:
**E** is alkylene, arylene, alkylarylene, arylalkylene, alkyleneamino, alkyleneimino, alkyleneoxyalkylene, aryleneoxy, aryleneoxyalkylene, oxaalkylene, oxyalkylene, dioxyalkylene or oxyarylene;
**R¹** is H, hydroxyl, oxyalkyl, oxyalkylenearyl, halogen, acetate or amine;
**R²** is alkyl, cycloalkyl, cycloheteroalkyl, aryl or alkylenearyl;
**m** = 1 to 3;
**n** = 0 to 2;
**m+n** = 3;
**x** = 1 or 2;
**L** is selected from among NR³C(O)NH, OC(O)N-, C(O)OCH₂CH(OH)CH₂, OCH₂CH(OH)CH₂, NHCH₂CH(OH)CH₂, alkylene, C(O)O, C(O)NR³, SO₂NR³, SO₂, NR-, =N-, ≡N⁺-, O and S;
**R³** is H, alkyl, aryl or alkylaryl; and
**φ** is linear, branched or dendritic polymeric chain with molecular weight from about 100 to about 5,000,000, preferably from about 1000 to about 100,000; without any limitation it can be polyalkylene, (for example, polyethylene, polypropylene, polybutylene, polyisobutylene, polyisoprene), polyoxyalkylene (for example, polyacetal, polyethylene glycol, polypropylene glycol, and polybutylene glycol), polyimine, polyester, polyamide, polyimide, polyurethane, polyuria, polyacrylate (such as polymethacrylate and polyalkyl/aryl acrylate), polyacrylonitrile, polysulfone, polystyrene, polyvinyl halogenide (polyvinyl chloride, polyvinyl fluoride, polyvinyl bromine), polyvinylidene halogenides, polyvinyl alcohols, polyvinyl acetate, polyvinylpyrrolidone, polyvinyl butyral, polycarbonate, polyether sulfone, poly(arylene/alkylene) sulfide, polyepoxide, polyaldehyde, polyketone, polyether ketone, phenol-formaldehyde, polyethylene terephthalate, polybutylene terephthalate, hydrocarbon resins, and metalorganic polymer including at least one atom silicon and/or germanium, such as polysiloxane; it also could be a random, block, dendritic, or comb co-polymer thereof.

In some instances, **E** is a -C₁-C₂₀ alkylene-, or a -C₂-C₂₀ alkylene-, or a -C₁-C₁₀ alkylene-, or -C₁-C₆ alkylene-. In some instances, **E** is a monocyclic, bicyclic or polycyclic bivalent aromatic or heteroaromatic system. In some instances, **E** is a 3-, 4-, 5-, 6-, 7-, 8-, 9-, 10-, 11-, 12-, 13- or 14-membered, bivalent aromatic or heteroaromatic mono-, bi- or polycyclic system. In some instances, **E** is a bivalent aromatic or heteroaromatic C₃-C₉ ring. In some instances, **E** is a bivalent aromatic or heteroaromatic C₄-C₈ ring. In some instances, **E** is (C₁-C₂₀)alkylene(C₃-C₁₄)arylene, or (C₂-C₂₀)alkylene(C₃-C₁₄)-arylene, or (C₁-C₁₀)alkylene(C₃-C₁₄)arylene, or (C₁-C₆)-alkylene(C₃-C₁₄)arylene, or (C₁-C₂₀)alkylene(C₃-C₉)arylene, or (C₂-C₂₀)alkylene(C₃-C₉)arylene, or (C₁-C₁₀)-alkylene(C₃-C₉)arylene, or (C₁-C₆)alkylene(C₃-C₉)arylene or (C₂-C₂₀)alkylenephenyl. In some instances, **E** is selected from among phenyl, naphthyl, anthracyl, indanyl, 1,2-dihydro-naphthyl, 1,4-dihydronaphthyl, indenyl, 1,4-naphthoquinonyl and 1,2,3,4-tetrahydronaphthyl. In some instances, **E** is a C₁-C₂₀alkyleneamino, or a C₂-C₂₀-alkyleneamino, or a C₁-C₁₀alkyleneamino, or C₁-C₆alkyleneamino. In some instances, **E** is a C₁-C₂₀-alkyleneimino, or a C₂-C₂₀alkyleneimino, or a C₁-C₁₀alkyleneimino, or C₁-C₆alkyleneimino. In some instances, **E** is a (C₁-C₁₀)-alkyleneoxy(C₁-C₂₀)alkylene, or a (C₁-C₂₀)alkyleneoxy(C₁-C₁₀)alkylene, or a (C₁-C₁₀)-alkyleneoxy(C₁-C₁₀)alkylene, or a (C₁-C₆)alkyleneoxy(C₁-C₆)alkylene. In some instances, **E** is a (C₃-C₂₀)aryleneoxy or a (C₄-C₉)aryleneoxy. In some instances, **E** is a (C₃-C₂₀) aryleneoxy-(C₁-C₂₀)alkylene, or a (C₄-C₉) aryleneoxy-(C₁-C₁₀)-alkylene or a (C₃-C₂₀) aryleneoxy-(C₁-C₆)alkylene. In some instances, **E** is an oxa(C₁-C₂₀)-alkylene, or an oxa(C₁-C₁₀)alkylene or an oxa(C₁-C₆)alkylene. In some instances, **E** is an oxy(C₁-C₂₀)alkylene, or an oxy(C₁-C₁₀)alkylene or an oxy(C₁-C₆)alkylene. In some instances, **E** is a dioxy(C₁-C₂₀)alkylene, or a dioxy(C₁-C₁₀)alkylene or a dioxy(C₁-C₆)-alkylene. In some instances, **E** is an oxy(C₃-C₂₀)arylene or an oxy(C₄-C₉)arylene.

In some instances, **R¹** is oxy(C₁-C₂₀)alkyl, or oxy(C₂-C₂₀)alkyl, or oxy(C₁-C₁₀)-alkyl, or oxy(C₁-C₆)alkyl. In some instances, **R¹** is oxy(C₁-C₂₀)alkyl(C₃-C₁₄)aryl, or oxy(C₂-C₂₀)alkyl(C₃-C₁₄)aryl, or oxy(C₁-C₁₀)alkyl(C₃-C₁₄)aryl, or oxy(C₁-C₆)alkyl(C₃-C₁₄)aryl, or oxy(C₁-C₂₀)alkyl(C₃-C₉)aryl, or oxy(C₂-C₂₀)alkyl(C₃-C₉)aryl, or -oxy(C₁-C₁₀)-alkyl(C₃-C₉)aryl, or oxy(C₁-C₆)alkyl(C₃-C₉)aryl or oxy(C₂-C₂₀)alkylphenyl. In some instances, **R¹** is halogen. In some instances, **R¹** is F, Cl or Br. In some instances, **R¹** is (C₁-C₂₀)amine. In some instances, **R¹** is hydroxyl. In some instances, **R¹** is H.

In some instances, **R²** is a (C₁-C₂₀)alkyl, or a (C₂-C₂₀)alkyl, or a (C₁-C₁₀)alkyl, or (C₁-C₆)alkyl. In some instances, **R²** is a (C₃-C₂₀)cycloalkyl, or a (C₄-C₁₀)cycloalkyl, or (C₄-C₈)cycloalkyl. In some instances, **R²** is a (C₃-C₂₀)cycloheteroalkyl containing 1 to 5 heteroatoms selected from among B, N, O, P, Se, Si and S, or a (C₄-C₁₀)cycloheteroalkyl containing 1 to 3 heteroatoms selected from among N, O, P, Si and S. In some instances, **R²** is a monocyclic, bicyclic or polycyclic aromatic or heteroaromatic system. In some instances, **R²** is a 3-, 4-, 5-, 6-, 7-, 8-, 9-, 10-, 11-, 12-, 13- or 14-membered, aromatic or heteroaromatic mono-, bi- or polycyclic system. In some instances, **R²** is an aromatic C₃-C₉ ring. In some instances, R² is an aromatic or heteroaromatic C₄-C₈ ring. In some instances, **R²** is (C₁-C₂₀)alkylene(C₃-C₁₄)aryl, or (C₂-C₂₀)-alkylene(C₃-C₁₄)-aryl, or (C₁-C₁₀)alkylene(C₃-C₁₄)aryl, or -(C₁-C₆)alkylene(C₃-C₁₄)aryl, or (C₁-C₂₀)alkylene-(C₃-C₉)aryl, or (C₂-C₂₀)alkylene(C₃-C₉)aryl, or (C₁-C₁₀)alkylene(C₃-C₉)-aryl, or (C₁-C₆)-alkylene(C₃-C₉)aryl or (C₂-C₂₀)alkylenephenyl. In some instances, **R²** is selected from among phenyl, naphthyl, anthracyl, indanyl, 1,2-dihydro-naphthyl, 1,4-dihydronaphthyl, indenyl, 1,4-naphthoquinonyl and 1,2,3,4-tetrahydronaphthyl.

In some instances, **R³** is hydrogen. In some instances, **R³** is a (C₁-C₂₀)alkyl, or a (C₂-C₂₀)alkyl, or a (C₁-C₁₀)alkyl, or (C₁-C₆)alkyl. In some instances, **R³** is a monocyclic, bicyclic or polycyclic aromatic or heteroaromatic system. In some instances, **R³** is a 3-, 4-, 5-, 6-, 7-, 8-, 9-, 10-, 11-, 12-, 13- or 14-membered, aromatic or heteroaromatic mono-, bi- or polycyclic system. In some instances, **R³** is an aromatic C₃-C₉ ring. In some instances, **R³** is an aromatic or heteroaromatic C₄-C₈ ring. In some instances, **R³** is (C₁-C₂₀)alkyl(C₃-C₁₄)aryl, or (C₂-C₂₀)alkyl(C₃-C₁₄)aryl, or (C₁-C₁₀)alkyl(C₃-C₁₄)aryl, or -(C₁-C₆)alkyl(C₃-C₁₄)aryl, or (C₁-C₂₀)alkyl(C₃-C₉)aryl, or (C₂-C₂₀)alkyl(C₃-C₉)aryl, or (C₁-C₁₀)alkyl(C₃-C₉)aryl, or (C₁-C₆)alkyl(C₃-C₉)aryl or (C₂-C₂₀)-alkylphenyl. In some instances, **R³** is selected from among phenyl, naphthyl, anthracyl, indanyl, 1,2-dihydro-naphthyl, 1,4-dihydronaphthyl, indenyl, 1,4-naphtho-quinonyl and 1,2,3,4-tetrahydronaphthyl. In some instances, **R³** is phenyl.

For any and all of **E**, **R¹**, **R²**, **R³**, **φ**, **L**, **m**, **n** and **x**, the substituents can be selected from among a subset of the listed alternatives in any combination thereof.

The full or partial hydrolysis of one or more compounds of Formula (1) can result in the modification of the substituents of Formula (1) so that they are reactive with a functionality on the pigment particle surface, resulting in the formation of modifying compound **M**. For example, a compound of Formula (1) can be fully or partially hydrolyzed resulting in a compound of Formula (1) where **R¹** is a hydroxyl, oxyalkyl, and oxyalkylenearyl, and **R¹** also can be a residual H, halogen, acetyl or amino, and the resulting modifying compound **M** can be bonded to the pigment particle surface via a covalent bond with a surface functional group, such as a functional group **Q** to form the group **-Q-M** on the pigment particle surface.

In some instances, modifying compound **M** can react with one or more that one functional group **Q** on the pigment particle surface to form one or more than one covalent bond. In some instances, the bond between modifying compound **M** and functional group **Q** is formed via a condensation or addition reaction. In some instances, the pigment particle surface includes a plurality of functional groups Q that can be the same or different. Functional group Q can be any functional group that can react with a group on modifying compound **M** to form a covalent bond. In some instances, functional group **Q** can be selected from among a hydroxyl, alkoxyl, phenolic, thiol, alkylenethiol and thiophenolic group, or a hydroxyl or thiol group that is attached to any aromatic, heteroaromatic, alicyclic or heterocyclic compound, or can be a functionality that can be reacted to form a hydroxyl, phenolic, thiol or thiophenolic group. Functional group **Q** can be part of the chemical structure of existing pigments, vat or disperse dyes, insoluble salts or complexes of dyes, or other complex colorants, such as shell type pigments with inorganic core covered with organic pigment or dye, or functional groups **Q** can be introduced in the course of synthesis of the chromophore itself or as a result of subsequent additional reactions. Further, functional groups **Q** also can be introduced through an ionic or hydrogen bond or through irreversible adsorption of low molecular weight compounds or monomers or oligomers or polymer(s) that include a functional group **Q.** The functional groups **Q** also can be introduced via direct reaction of a precursor containing a functional group **Q** with a pigment particle surface (chemisorption).

In some instances, the modifying compound **M** can interact with a functional group **Q** on the pigment particle surface to form the moiety **-QM.** In some instances, **Q** includes a hydroxyl group and the moiety **-QM** is a reaction product of the condensation of a hydrolyzed compound of Formula (1) with a hydroxyl group of **Q**. For example, the compound of Formula (1) can have the structure:

**φ-L-[E-Si(R¹)ₘ(R²)ₙ]ₓ**

where **R¹** is -O-methyl, **m** is 3 and **n** is 0 and each of each of **φ**, **E**, **R¹**, **R²**, **m**, **n** and **x** is as identified above, which when hydrolyzed yields the modifying compound **M** of the structure **φ-L-[E-Si(OH)₃]ₓ** that interacts with the hydroxyl functionality of **Q** on the pigment particle surface to attach **M** to the pigment particle surface via at least one of the hydroxyl groups of the Si atom, such as via a condensation reaction. In some instances, the modifying compound **M** can interact with functional group **Q** on the pigment particle surface as well as other functional groups on one or plurality of different modifying compounds **M**. For example, the surface modified pigment particles can include the moiety **-Q-M**, which can have the following formula: 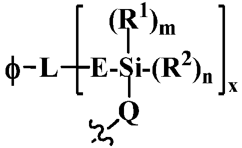 where each **Q** independently is O, oxyalkylene, S, thioalkylene, oxyarylene, thioarylene, O-heteroarylene, S-heteroarylene, oxyheterocyclylene, thioheterocyclylene, oxyalicyclylene or thioalicyclylene; **m** is 1 or 2; **n** is 0 or 1; **E** is alkylene, arylene, alkylarylene, arylalkylene, alkyleneamino, alkyleneimino, alkyleneoxyalkylene, aryleneoxy, aryleneoxyalkylene, oxaalkylene, oxyalkylene, dioxyalkylene or oxyarylene; each **R¹** independently is H, hydroxyl, oxyalkyl, oxyalkylenearyl, halogen, acetate or amine; each **R²** independently is alkyl, cycloalkyl, cycloheteroalkyl, aryl or alkylenearyl; **x** = 1 or 2; **L** is selected from among NR³C(O)NH, OC(O)NH, C(O)OCH₂CH(OH)CH₂, OCH₂CH(OH)CH₂, NHCH₂CH(OH)CH₂, alkylene, C(O)O, C(O)NR³, SO₂NR³, SO₂, NR³, =N-, ≡N⁺-, O and S; **R³** is H, alkyl, aryl or alkylaryl; **φ** is a linear, branched or dendritic polymeric chain with molecular weight from about 100 to about 5,000,000, preferably from about 1000 to about 100,000; without any limitation it can be polyalkylene, (for example, polyethylene, polypropylene, polybutylene, polyisobutylene, polyisoprene), polyoxyalkylene (for example, polyacetal, polyethylene glycol, polypropylene glycol, and polybutylene glycol), polyimine, polyester, polyamide, polyimide, polyurethane, polyuria, polyacrylate (such as polymethacrylate and polyalkyl/aryl acrylate), polyacrylonitrile, polysulfone, polystyrene, polyvinyl halogenide (polyvinyl chloride, polyvinyl fluoride, polyvinyl bromine), polyvinylidene halogenides, polyvinyl alcohols, polyvinyl acetate, polyvinylpyrrolidone, polyvinyl butyral, polycarbonate, polyether sulfone, poly(arylene/alkylene) sulfide, polyepoxide, polyaldehyde, polyketone, polyether ketone, phenol-formaldehyde, polyethylene terephthalate, polybutylene terephthalate, hydrocarbon resins, and metalorganic polymer including at least one atom silicon and/or germanium, such as polysiloxane; it also could be a random, block, dendritic, or comb co-polymer thereof; and each **R¹** independently can interact with a different functional group **Q** on the pigment particle surface or with an **R¹** substituent of another modifying compound **M.**

The modifying compound **M** also can interact with a plurality of functional groups **Q** on the pigment particle surface as well as other functional groups on one or a plurality of different modifying compound **M.** For example, modifying compound **M** can interact with two functional groups **Q** on the pigment particle surface to form, *e.g.,* the moiety **-Q-M-Q-** having one of the following formulae or a combination thereof: 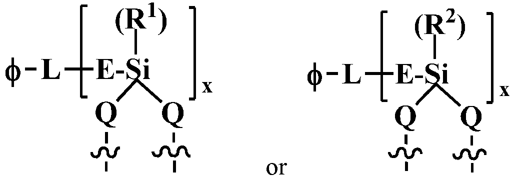 where each **Q** independently is O, oxyalkylene, S, thioalkylene, oxyarylene, thioarylene, oxyheterocyclylene, thioheterocyclylene, oxyalicyclylene or thioalicyclylene; each **R¹** can interact with a different functional group **Q** on the pigment particle surface or with an **R¹** substituent of another modifying compound **M**; and each of **φ**, **E**, **R¹**, **R²** and **x** is as described above.

In some instances, at least two modifying compounds **M** interact with each other and interact with different functional groups **Q** on the pigment particle surface. For example, two modifying groups **M** can interact with two different functional groups **Q** on the pigment particle surface to form the moiety **-Q-M-M-Q-.** In some instances, the moiety **-Q-M-M-Q-** can have the following formula: 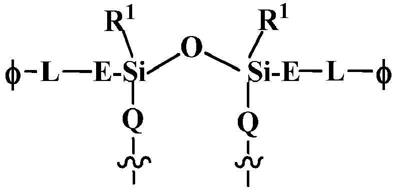 where each **Q** independently is O, oxyalkylene, S, thioalkylene, oxyarylene, thioarylene, oxyheterocyclylene, thioheterocyclylene, oxyalicyclylene or thioalicyclylene; each of **φ**, **L**, **E**, **R¹** is as described above; and each **R¹** can interact with a different functional group **Q** on the pigment particle surface or with an **R¹** substituent of another modifying compound **M.**

### B. Preparation of Compounds of Formula (1)

Modifying compound **M** can be prepared by full or partial hydrolysis of a compound of Formula (1):

**φ-L-[E-Si(R¹)ₘ(R²)ₙ]ₓ**

where each of **φ**, **L**, **E**, **R**, **R¹**, **R²**, **m**, **n** and **x** is as defined above. Compounds of Formula (1) can be prepared by reacting a compound of Formula (2): 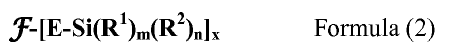 with a compound of Formula (3): 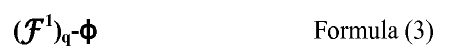 where 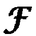 is selected from among -NCO, -NR⁴R⁵, -N⁺R⁴R⁵R⁶, -SO³⁻, -OH, -SH, R⁷,-COOH, -COR⁷, -SO₂R⁷, epoxy, acrylate and vinyl; 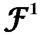 is selected from among -NCO,-NR⁴R⁵, -N⁺R⁴R⁵R⁶, -SO³⁻, -OH, -SH, R⁷, -COOH, -COR⁷, -SO₂R⁷, epoxy, acrylate and vinyl; each of **R⁴**, **-R⁵** and **R⁶** independently is H or C₁-C₂₀alkyl; **R⁷** is F, Cl or Br; **q**=1 to 100; and **φ**, **E**, **R¹**, **R²**, **m**, **n** and **x** are as described above, where functional group 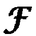 of the compound of Formula (2) reacts with a functional group 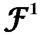 of the compound of formula (3). When the compound of Formula (3) includes a plurality of functional groups 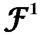 , a plurality of compounds of Formula (2) can react with the compound of Formula (2), where a functional group 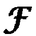 of each of the compounds of Formula (2) reacts with a different functional group 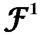 of the compound of formula (3). In some instances, a compound of Formula (3) has fewer than 90, or fewer than 80, or fewer than 70, or fewer than 60, or fewer than 50, or fewer than 40, or fewer than 30, or fewer than 20, or fewer than 10, or fewer than 5 functional groups 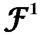 . In some instances, a compound of Formula (3) has 5, 4, 3, 2 or 1 functional groups 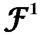 .

In some instances, the reaction between the functional group 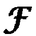 of a compound of formula (2) and the functional group(s) 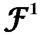 of a compound of Formula (3) is an addition or condensation reaction. Optionally, pigment particles can be treated with a compound of formula (2) first and then reacted with a compound of Formula (3) via functional groups 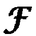 and 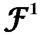 .

An exemplary process is depicted in **Scheme I.**

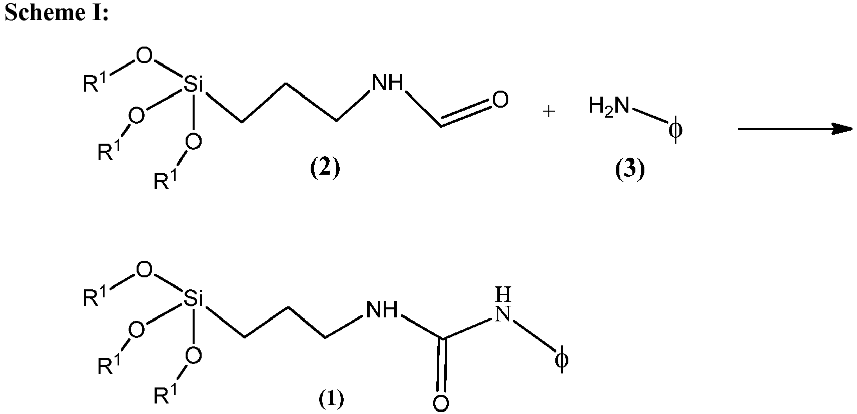

As shown in **Scheme I**, a compound of Formula (2) where m = 3, n = 0, x = 1, 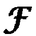 is -NCO and **E** is -CH₂CH₂CH₂- is reacted with a compound of Formula (3) where 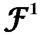 is NH₂ to produce a compound of Formula (1).

An exemplary compound of Formula (1) is a compound where **φ** is a polyalkylene glycol with MW = 2000; **L** is NHC(O)NH; **E** is C₃H₆; **R¹** is OC₂H₅; **m**=3; **n**=0; and **x**=1. Starting materials for this exemplary compound are Surfonamine® L-200 (available from Huntsman International) and 3-isocyanatopropyltriethoxysilane (available from Gelest, Inc., Morrisville, PA), where 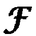 is NCO; 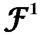 is NH₂; **E** is C₃H₆; **R¹** is OC₂H₅; **m**=3; **n**=0; **q**=1; and **x**=1.

In another example of a compound of Formula (1), **φ** is a polyisobutylene with MW=1000-2000, **L** is NHCH₂CH(OH)CH₂; **E** is C₃H₆; **R¹** is OCH₃; **m**=3; **n**=0; **x**=1. Starting materials for this example are Kerocom® PIBA 03 (available from BASF AG, Ludwigshafen, Germany) and 5,6-epoxyhexyltriethoxysilane (available from Gelest, Inc., Morrisville, PA) with 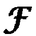 is epoxy group; 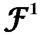 is NH₂; **E** is C₃H₆; **R¹** is OCH₃; **m**=3; **n**=0; **q**=1; and **x**=1.

The amount of the modifying compound **M** in the modified pigment composition can be from about 0.1% to 95% based on the weight of the modified pigment composition, and can be from about 10% to 60% based on the weight of the composition. The amount of the modifying compound **M** in the modified pigment composition can be from about 5% to 50%, or 10% to 45%, or 15% to 40%, or 20% to 30%, or 20% to 40%, or 25% to 60%, or 30% to 65%, or 35% to 70%, or 40% to 80%, or 45% to 90%, or 50% to 95%, based on the weight of the modified pigment composition. At a concentration of modifying compound **M** below about 0.1% weight usually will not provide the desired colloidal stability and at a concentration of modifying compound **M** above 95% usually will result in inadequate rheological behavior and decreased interfacial tension (IFT).

### C. Pigment Particles

The particles of pigment to be surface modified can include particles of any organic pigment, insoluble dyes or salts or complexes of dyes, or carbon black. Pigments with surface hydroxyl or phenolic groups are most suitable for the purpose of the current invention. Thiol or thiolphenolic groups can be utilized as well; however, they are less preferable because of the lower stability of the S-Si bond versus the O-Si bond. The hydroxyl/phenolic groups can be part of the chemical structure of existing pigments, vat or disperse dyes, insoluble salts or complexes of dyes, or other complex colorants, such as shell type pigments with inorganic core covered with organic pigment or dye, or they can be introduced through a customized synthesis of the pigment or the dye. In both cases, hydroxyl group can be introduced in the course of synthesis of the chromophore itself or as a result of subsequent additional reactions. Further, hydroxyl or phenolic groups also can be introduced through irreversible adsorption of hydroxyl or phenolic group-containing low molecular weight compounds or monomers/oligomers/polymer.

Non-limiting examples of suitable pigments include azo or azo condensed pigments, metal complexes, benzimidazolones, azomethines, methines such as cyanines, azacarbocyanines, enamines, hemicyanines, streptocyanines, styryls, zeromethines, mono-, di-, tri-, and tetraazamethine; caratenoids, arylmethanes such as diarylmethanes and triarylmethanes; xanthenes, thioxanthenes, flavanoids, stilbenes, coumarins, acridenes, fluorenes, fluorones, benzodifuranones, formazans, pyrazoles, thiazoles, azines, diazines, oxazines, dioxazines, triphenodioxazines, phenazines, thiazines, oxazones, indamines, nitroso, nitro, quinones such as hydroquinones, naphthaquinones, and anthraquinones; rhodamines, phthalocyanines, neutrocyanines, diazahemicyanines, porphirines, perinones, perylenes, pyronins, diketopyrrolopyrroles, indigo, indigoids, thioindigo, indophenols, naphthalimides, isoindolines, isoindolinones, iminoisoindolines, iminoisoindolinones, quinacridones, flavanthrones, indanthrones, anthrapyrimidines, quinophthalones, isoviolanthrones, pyranthrones, and any combinations and/or any solid solution thereof; vat or disperse dyes or insoluble salt/complex of acid, direct, reactive, mordant, solvent, natural, basic (cationic), sulfur, fluorescent, or optical brightener; mixtures of organic, inorganic pigments or extenders, solid solutions thereof, shell type pigments with inorganic nuclei covered with organic shell. The pigment also can be a dispersed polymer particle, such as polystyrene, polyamides, polysulfones, polyesters, polyurethanes, polyalkylenes, polysulfides, co-polymers and mixtures or co-polymers thereof, but not limited by them only. The dispersed polymer particles can be non-colored or colored with any of the aforementioned pigments and/or dyes.

Non-limiting exemplary organic pigments include C.I. Pigment Black 1, 2, 3, 31, and 32; C.I. Pigment Green 7, 36, 37, 47, 54, and 58; C.I. Pigment Blue 15:1, 15:2, 15:3, 15:4, 15:6, 16, 21, 22, 25, 60, 64, 65, 75, 76, and 79; C.I. Pigment Violet 19, 20, 23, 25, 29, 31, 32, 33, and 37; C.I. Pigment Brown 1, 25, 28, 38, 42; C.I. Pigment Red 12, 13, 14, 15, 21, 23, 32, 40, 85, 88, 89, 112, 114, 122, 123, 144, 147, 149, 166, 168, 170, 171, 175, 176, 177, 178, 179, 180, 181, 183, 184, 185, 187, 188, 189, 190, 192, 194, 195, 196, 202, 208, 209, 214, 216, 220, 221, 224, 226, 242, 245, 248, 251, 254, 255, 256, 260, 264, 266, 269, and 271; C.I. Pigment Orange 2, 3, 4, 5, 16, 22, 24,36, 38, 40, 43, 51, 60, 61, 62, 64, 66, 69, 71, 72, 73, and 77; C.I. Pigment Yellow 7, 12, 13, 23, 24, 74, 83, 93, 94, 95, 97, 101, 108, 109, 110, 120, 123, 138, 139, 147, 148, 150, 151, 154, 155, 167, 170, 171, 173, 174, 175, 180, 181, 182, 185, 192, 193, 194, 199, 213, 218 and 220; C.I. Vat Black 1, 2, 7, 8, 25, 27, 28, 29, 30, 35, 65; C.I. Vat Green 1, 2, 3, 4, 6, 8, 9, 11, 12, 17, 23; C.I. Vat Blue 1, 2,3, 4, 5, 6, 7, 8, 9, 11, 12, 13, 14, 16, 18, 19, 20, 21, 22, 25, 30, 31, 32, 33, 37, 40, 42, 43, 47, 53, 64, and 67; C.I. Vat Violet 1, 2, 3, 4, 5, 8, 9, 10, 13, 14, 15, 16, 17, 18, and 19; C.I. Vat Brown 1, 3, 5, 8, 9, 14, 16, 21, 22, 25, 26, 31, 33, 37, 42, and 45; C.I. Vat Red 10, 13, 14, 15, 18, 19, 20, 21, 23, 24, 28, 29, 32, 35, 37, 38, 39, 40, 42, 44, and 48; C. I. Vat Orange 1, 2, 3, 4, 7, 9, 11, 13, 15, 16,17, 18, 19, and 20; C. I. Vat Yellow 1, 2, 3, 4, 9, 10, 11, 12, 13, 17, 18, 20, 23, 26, 27, 28, 29, 31, 33, and 44.

In some instances, exemplary organic pigments include C.I. Pigment Black 31 and 32; C.I. Pigment Green 7, 36, 47, 54, and 58; C.I. Pigment Blue 15:1, 15:2, 15:3, 15:4, 15:6, 16, and 60; C.I. Pigment Violet 19, 23, 29, and 37; C.I. Pigment Brown 25, 28, and 38; C.I. Pigment Red 122, 123, 144, 149, 168, 171, 175, 176, 177, 178, 179, 183, 185, 189, 190, 202, 208, 209, 220, 224, 242, 251, 254, 255, 260, and 264; C.I. Pigment Orange 36, 43, 60, 61, 62, 64, and 71; C.I. Pigment Yellow 74, 83, 95, 97, 110, 120, 138, 139, 150, 151, 154, 155, 167, 180, 181, 182, 185, 192, 194, 199, and 213; C.I. C.I. Vat Black 8, 25, and 27; C.I. Vat Green 1, 2, and 4; C.I. Vat Blue 4, 6, 11, 16, and 19; C.I. Vat Violet 1, 9, 10, and 13; C.I. Vat Brown 1, 25, 31, and 33; Vat Red 13, 29, and 31; C. I. Vat Orange 1, 2, 3, 7, 9, and 11; C. I. Vat Yellow 2, 4, 10, 12, and 33.

In some instances, a pigment containing at least one hydroxyl group is selected. Exemplary organic pigments containing at least one hydroxyl group include C.I. Pigment Blue 25; C.I. Pigment Violet 20, 25, and 32; C.I. Pigment Brown 1 and 42; C.I. Pigment Red 12, 13, 14, 15, 21, 23, 32, 40, 85, 89, 112, 114, 147, 170, 171, 175, 176, 177, 183, 184, 185, 187, 188, 196, 208, 220, 221, 242, 245, 256, 266, and 269; C.I. Pigment Orange 2, 3, 4, 5, 22, 24, 38; C.I. Pigment Yellow 7, 23, 101, and 148; C.I. Vat Blue 12, 13, 42, 43, and 47; C.I. Vat Violet 15 and 17; C.I. Vat Red 40.

In some instances, a pigment containing at least one primary aromatic amino group or nitro is selected. For example, an organic pigment containing at least one primary aromatic amino group that could be substituted by a phenolic group via diazonium salt, or at least one nitro group that first is reduced to amino group followed by conversion to hydroxyl, or that can be replaced directly with a hydroxyl group, can be selected. Exemplary of such pigments are C.I. Pigment Black 1; C.I. Pigment Red 177, 196; C.I. Vat Black 7; C.I. Vat Green 9 and 11; C.I. Vat Blue 31, 32, 33 and 64; C.I. Vat Red 10, 18, 20, 21, and 31.

In some instances, the organic pigment can be a near-infrared (NIR) reflecting or NIR transmissive pigment or a fluorescent pigment. Non-limiting example of such pigments are the perylene pigments. These pigments can be used individually or as a mixture of two or more NIR reflecting/ transmissive organic pigments, dyes, solid solution or product of reaction thereof. In one specific example, the mixture is a black pigment or dye or combination thereof.

Non-limiting examples of inorganic pigments include carbon black, titanium dioxide, zinc oxide, silica, iron oxide, antimony yellow, lead chromate, lead chromate sulfate, lead molybdate, ultramarine blue, cobalt blue, manganese blue, chrome oxide green, hydrated chrome oxide green, cobalt green, metal sulfides, cadmium sulfoselenides, zinc ferrite, bismuth vanadate, and derivatives and any combinations thereof. Non-limiting specific examples of inorganic pigments are C.I. Pigment Black 6, 7, 9, 11, 12, 14, 15, 22, 26, 27, 28, 29, 30, 33, 34 and 35; C.I. Pigment Green 18, 20, 21, and 22; C.I. Pigment Blue 27, 30, and 73; C.I. Pigment Red 265 and 275; C.I. Pigment Yellow 38, 40, 53, 119, 157,158, 160, 161, 162, and 184; C.I. Pigment White 4, 5, 6, 6:1, 7, 8, 9, 10, 12, 13, 14, 15, 18, 18:1, 19, 21, 22, 23, 24, 25, 26, 27, 28, 32, 33, and 36.

In some instances, the pigment is carbon black or an inorganic pigment selected from among C.I. Pigment Black 6, 7, 9, 11, 12, 14, 15, 22, 26, 27, 28, 29, 30, 33, 34 and 35 or C.I. Pigment White 4, 5, 6, 6:1, 7, 18, 18:1, 26, 28 and 32. In some instances, the inorganic pigment is C.I. Pigment Black 7. In some instances, a black pigment is a mixture of two or more of carbon black, organic and/or inorganic pigments, dyes, solid solution or product of reaction thereof.

In some instances, the inorganic pigment is NIR reflecting pigment or a mixture of two or more NIR reflecting/transmissive inorganic and organic pigments, dyes, solid solution or product of a reaction thereof. In one specific example, the mixture is a black NIR reflecting pigment and NIR transmissive organic pigment or dye composition. In another example, the NIR reflecting pigment is white pigment or a combination of the NI**R** reflecting white pigment with organic transmissive pigment or dye. Exemplary NIR reflecting pigments include titanium oxide (TiO₂), composite oxide system pigment, titanium oxide-coated mica pigment and zinc oxide pigment.

### D. Pigment Functional Group Modification

The aforementioned pigments without any preferred functional groups, such as hydroxyl/phenolic groups, can be subjected to additional reactions in order to introduce such functional groups, such as functional groups **Q**, particularly hydroxyl/phenolic groups. Any reaction known in the art that results in the addition of a functional group **Q**, such as a hydroxyl/phenolic group, or the conversion of a reactive group to a hydroxyl/phenolic group, can be used. Non-limiting examples include reaction of pigment with paraformaldehyde in mineral acid yielding methylol derivatives; substitution of amino-, nitro- groups or halogen by a hydroxyl or phenolic group; addition of a hydroxyl to unsaturated bonds; reaction of epoxides with a carboxylic or amino group; and reduction of aldehydes, ketones, and carboxylic acids.

Surface hydroxyl or phenolic groups also can be introduced via irreversible adsorption. Introduction of surface hydroxyl/phenolic groups via irreversible adsorption can be done via any method known in the art, such as by adsorption from solution if the modifier is soluble in the solvent of choice, or through mechanochemical modification in case of insoluble modifier. For example, the pigment can be treated with a pigment derivative or a dye of identical or different chromophore structure containing a functional group, such as hydroxyl/phenolic groups, or hydroxyl or phenolic group containing monomer/oligomer/polymer from solution or using any type of milling and grinding equipment. When monomer/oligomer/polymer is used, any method of encapsulation or microencapsulation known in the art, with or without cross-linking, can be used. A simplified exemplary process is shown in Scheme II.

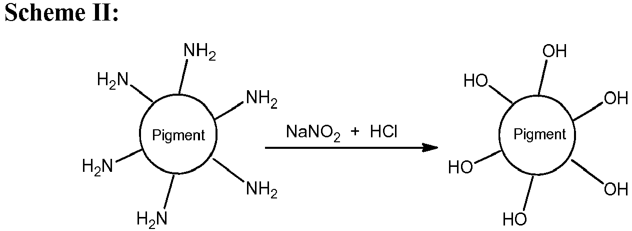

As shown in Scheme II, a pigment particle containing aromatic -NH₂ groups on its surface can be treated with NaNO₂ under acidic conditions to yield diazonium -groups that are replaced by -OH functional groups on the pigment surface.

Hydroxyl or phenolic groups also can be introduced as a result of direct reaction of a precursor with pigment particle surface. Non-limiting examples include diazotization of aromatic aminophenols, for example, *p*-aminophenol, aminonaphthols, aminobenzyl alcohol, and the like with nitrous acid to form a diazonium salt, followed by reacting the diazonium salt with the pigment particle surface. If the reaction is carried out at a temperature higher than ambient, the diazonium salt decomposes forming a radical that reacts with pigment particle surface. At a temperature lower than 5°-7°C, diazonium salt also can react with a suitable pigment via an azo coupling mechanism.

### E. Pigment Purification

If desired, the pigment can be purified prior to or after surface modification or both, such as to minimize or eliminate organic and inorganic intermediates, impurities, and contaminations utilizing any appropriate techniques known in the art. Non-limiting examples include extraction, sublimation, centrifugation, distillation, re-crystallization, fractional crystallization, ultrafiltration, reverse osmosis, and any combination thereof.

### F. Pigment Particle Size

The size of the pigment particle can be selected to be of a size suitable for the end use of the surface modified pigments. Pigment particles can have a mean weight diameter from dynamic light scattering particle size analysis preferably ranging from at or about 10 nm to about 5 µm. In some instances, the particle size is in a range of from at or about 20 nm to at or about 1,000 nm. In some instances, the particle size is in a range of from at or about 20 nm to at or about 500 nm. In some instances, the particle size is in a range of from at or about 50 nm to at or about 300 nm. In some instances, the particle size is in a range of from at or about 75 nm to at or about 250 nm. In some instances, the particle size is in a range of from at or about 20 nm to at or about 200 nm. In some instances, the particle size is in a range of from at or about 30 nm to at or about 300 nm. In some instances, the particle size is in a range of from at or about 50 nm to at or about 500 nm. In some instances, the particle size is in a range of from at or about 250 nm to at or about 750 nm.

### IV. METHODS OF SURFACE MODIFICATION OF PIGMENTS

Also provided herein are methods of modification of pigments, particularly surface modification of pigments. In some instances, the methods allow formation of covalent bonds between silicon atoms of a modifying compound **M** and surface hydroxyl groups of functional group **Q** of pigment particles, such as any organic pigment, insoluble dyes or salts or complexes of dyes, or carbon black or combinations thereof.

The method of surface modification of pigment particles includes the synthesis of a compound of Formula (1):

**φ-L-[E-Si(R¹)ₘ(R²)ₙ]ₓ** Formula (1)

by reacting a compound of Formula (2): 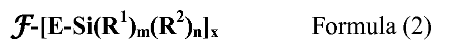 with a compound of Formula (3): 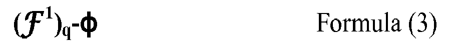 as a first process step, where each of **φ**, **L**, **E**, **R¹**, **R²**, **m**, **n**, **x**, 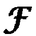 , 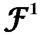 and **q** is as defined above. The compound of Formula (1) is subject to a full or partial hydrolysis, resulting in the formation of modifying compound **M.** The pigment particles can be treated with the modifying compound **M** as a second process step. Optionally, pigment particles can be treated with a compound of Formula **(2)** first and then reacted with a compound of Formula **(3)** via functional groups **F** and **F¹**. Depending on the polarity of the compound of Formula **(3)**, treatment can be done in water in case of hydrophilic polymers, or in any suitable solvent or any mixture of solvents with or without addition of water. The pigment is pre-mixed first with a solvent, optionally with addition of co-solvent, surfactant, defoamer, polymeric dispersant and other additives known to those the skilled in the art. If necessary, the dispersion can be milled to reduce pigment particle size before, during, or after treatment with modifying compound **M** or with a compound of formula **(2).** Without limitation, any type of milling equipment can be used. Exemplary milling equipment that can be used includes high speed dissolver and homogenizer, rotating ball mill, vibration mill, agitated horizontal or vertical media mill, basket mill, rotor/stator type machines, or attritors. The milling equipment can work by batch operation or by way of recirculation and/or discrete pass. Any known type and size of media can be used, for example, glass, ceramics, sand, polymeric, and metal media with sizes in a range from 15 µm to about 10 cm. Media shape can be any shape known to the skilled artisan, including circular, regular, irregular, or a mixture thereof. Typical equipment includes machines manufactured by Eiger, Netzsch, Buhler, Premier, Hockmeyer, Chicago Boiler, Union Process, IKA Works, Baker-Perkins, Paul-O-Abbe etc. After milling, the pigment dispersion optionally can be filtered or centrifuged or both to remove large pigment particles, broken media, or contaminants.

The treatment of the pigment particles with a modifying compound **M** or a compound of Formula **(2)** in the course of second process step can be carried out at any temperature in the range of from 0°C to 200°C for a time period from 0.5-24 hours with or without pigment milling as explained above. The pH can be in the range of from 3 to 9, or from 4 to 8, or from 5 to 7. The treatment can be performed under acidic, neutral or basic conditions. An exemplary simplified process is shown in **Scheme III.**

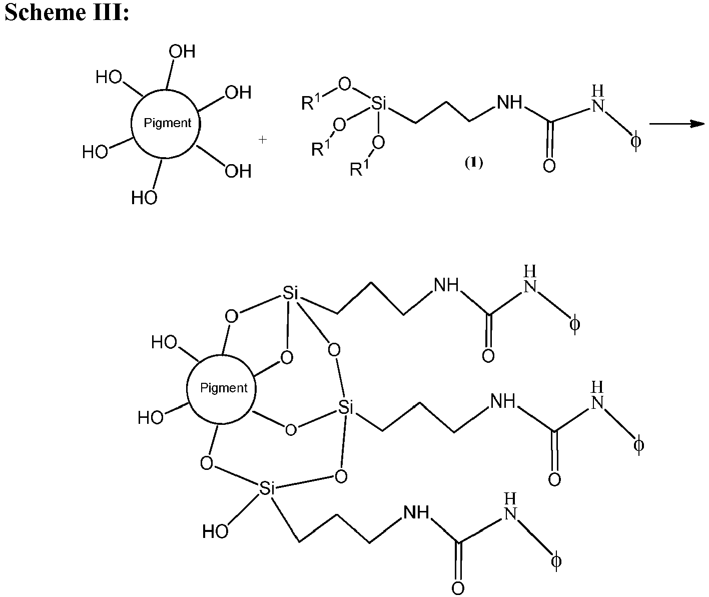

As shown in **Scheme III**, pigment particles containing a functional group **Q**, depicted here as -OH, are reacted with compounds of Formula (1), where **m** = 3, **n** = 0, **x** = 1, **E** is -CH₂CH₂CH₂- and **L** is -NHC(O)NH-, which during the processing is subject to a full or partial hydrolysis, resulting in the formation of modifying compounds **M.** The modifying compounds **M** react with the functional groups on the pigment particle surface and optionally can react with other modifying compounds **M**, as depicted in **Scheme III.** In some instances, all of the functional groups on the pigment particle surface form a moiety **-QM.** In some instances, unreacted functional groups **Q** remain on the pigment particle surface. In addition, compounds of Formula (1) also can attach to the pigment particle surface by direct chemisorption or by hydrogen bonding with the surface of the pigment particles.

In a third process step, the treated pigment particles are isolated. The isolation step can be performed using any method known in the art. For example, the particles can be isolated by filtration or centrifugation to form a press-cake and subsequently drying the press-cake. The particles also can be isolated by direct drying of the pigment dispersion without filtration. Both press-cake and pigment dispersion can be dried using any known process and equipment type such as simple oven, spray dryer, fluid bed dryer, pneumatic/flash dryer, rotary dryer/evaporator, microwave, infra-red, or radio frequency dryer, but not limited to these only. The drying process can be done at atmospheric pressure or at lower pressure. The drying process can be done under flow of inert gas, such as nitrogen or argon. The duration and temperature of the drying process depend on the type of the process and the equipment used and can be from a few seconds to 48 hours and temperature can vary from about 40°C to 300°C, and can be from about 80°C to 200°C, although other combinations of time and temperature can be used.

Optionally, if it is desired, the surface modified pigment can be purified from organic and inorganic intermediates, impurities, and contamination utilizing any appropriate techniques (*e.g*., see U.S. Pat. Nos. 4,370,269 and 4,124,582 and U.S. Pat. Pub. No. 2006/0167236). Non-limiting examples include extraction, sublimation, centrifugation, distillation, ultrafiltration, reverse osmosis, or any combination thereof.

In an exemplary process, a compound of Formula (1) is mixed with pigment in a solvent, which can be aqueous or non-aqueous (a process using a non-aqueous solvent can include addition of water). In the course of pigment treatment, the compound of Formula (1) is partially or fully hydrolyzed to form modifying compound **M** that reacts with functional groups, such as functional group(s) **Q**, on the pigment particle surface.

In a second exemplary process, a compound of Formula (1) can be mixed in a solvent, which can be aqueous or non-aqueous (a process using a non-aqueous solvent can include addition of water) under the same conditions as described above, resulting in full or partial hydrolysis of the compound of Formula (1) to yield modifying compound **M** in a separate step, followed by mixing with the pigment to be modified.

### V. PIGMENT DISPERSIONS CONTAINING SURFACE-MODIFIED PIGMENTS

The surface modified pigments provided herein can be used for preparation of pigment dispersions with excellent stability and excellent function, particularly for applications that use an electrowetting technology. Dispersions made with the surface modified pigments provided herein demonstrate excellent stability in a wide range of solvents without requiring additional polymeric dispersants, synergists, and surfactants, and thus, the surface modified pigments provided herein actually are self-dispersing pigments. Although the modified pigments provided herein actually are self-dispersing, compositions that include the surface modified pigments provided herein also can include other additives, including polymeric dispersants, synergists, and surfactants. The surface modified pigments provided herein are especially useful for making imaging fluids for electronic displays, color filters, liquid toners, inks including inkjet inks and aerosol inks, coatings, paints, cosmetics, and plastics and other applications. The surface modified pigments provided herein result in dispersions exhibiting excellent color and rheological properties, improved functionality and durability, particularly in electronic devices due to the non-ionic mechanism of dispersion stabilization in both polar and non-polar media.

The dispersions provided herein include the surface modified pigment of the invention and can generally also include at least one polar or non-polar solvent, and optionally additional organic or inorganic pigments or dyes or surface modified pigments or insoluble dyes made by a method of chemical modification by covalently attaching ionic, nonionic, or polymeric groups to the pigment particle surface. The dispersions provided herein also can include surfactant, synergist, additive for electrical conductivity control, polymeric dispersant, resin, defoamer, charge director, and other functional additives known those the skilled in the art, alone or in any combination.

The dispersion can be used for preparation of an imaging polar or non-polar fluid for use with electrowetting, electrofluidic, or electrophoretic devices. The dispersion also can be used for preparation of aqueous or non-aqueous inks including inkjet inks and aerosol inks, coatings, color filters, electrographic toners, liquid developers, paints, cosmetics and plastics that include the surface modified pigment provided herein.

### A. Polar solvents

The dispersions including the surface modified pigments provided herein can include a polar solvent. Any polar solvent known in the art can be included in the dispersion. For preparation of imaging fluid, the polar solvent can be an individual liquid polar solvent or a combination of two or more liquid polar solvents. Non-limiting examples include water, glycols, polyglycols, alcohols, polyols, ethers, esters, ketones, lactams, pyrrolidones, carbonates, sulfones, sulfoxides, amides, heterocyclic amines, nitriles, aliphatic acids, acetals, carbamates and aldehydes. The solvent also can include a compound having multiple functions, for example a functionality selected from among alcohol, ketone, ether, ester, amine, nitrile, amide, sulfoxide, carboxylic acid, aldehyde and halogen and any combination thereof. For example, the solvent can include a combination of functions, such as alcohol/ketone, ether/ester/ketone and amine/alcohol/halogen.

Non-limiting specific examples of polar solvents include water, ethylene glycol, 1,2-propylene glycol, 1,3-propylene glycol, 1,4-butylene glycol, diethylene glycol, dipropylene glycol, glycerin, ethylene carbonate, propylene carbonate, 1,2-butylene carbonate, 1,2- cyclohexane carbonate, glycerin carbonate, dimethyl carbonate, diethyl carbonate, acetophenone, pyridine, dimethyl malonate, diacetone alcohol, hydroxypropyl carbamate, beta-hydroxyethyl carbamate, N-methyl formamide, N-methyl acetamide, dimethylsulfoxide, sulfolane, 2-pyrrolidone, N-methyl-2-pyrrolidone, N-cyclohexyl-2-pyrrolidone, acetonyl acetone, cyclohexanone, ethyl acetoacetate, ethyl-L-lactate, pyrrole, N-methyl pyrrole, N-ethyl pyrrole, 4*H*-pyran-4-one, 1,3-dimethyl-2-imidazolidinone, morpholine, N-methylmorpholine, N-ethylmorpholine, N-formylmorpholine, beta-propiolactone, beta-valerolactone, beta-hexalactone, gamma-butyrolactone, gamma-valerorolactone, gamma-hexalactone, gamma-heptalactone, gamma-octalactone, gamma-nonalactone, gamma-decalactone, delta-valerolactone, delta-hexalactone, delta-hepta-lactone, delta-octalactone, delta-nonalactone, delta-decalactone, delta-tetradecalactone, delta-octadecolactone, and any combination thereof.

### B. Non-polar solvents

The dispersions including the surface modified pigments provided herein can include a non-polar solvent. Any non-polar solvent known in the art can be included in the dispersion. For preparation of imaging fluid, the non-polar solvent can be an individual liquid non-polar solvent or a combination of two or more liquid non-polar solvents.

Exemplary non-polar solvents particularly useful for preparation of imaging fluids include non-substituted, substituted, linear, branched or cyclic compounds including silicon and/or germanium; aliphatic or aromatic hydrocarbons, partially hydrogenated aromatic hydrocarbons, alicyclic or aromatic heterocyclic compounds or derivatives thereof containing a halogen, nitro, nitroso, epoxy, phosphate, or cyano groups; fatty alcohols and carboxylic acids, and ethers, esters, and amides thereof. The solvent also can include a compound having multiple functions. Non-limiting examples include the solvent having halogen and nitro groups, or cyano and epoxy groups.

Non-limiting specific examples of non-polar solvents are decane, dodecane, tetradecane, cyclohexane, decalin, tetralin, octadecanol, silicone oils for example linear or cyclic siloxanes, branched aliphatic hydrocarbons Isopar® series from Exxon, and other petroleum solvents such as kerosene and mineral spirit, tetradecane epoxide, and fluorinated hydrocarbons.

### C. Preparation of the dispersions and colored imaging fluids

The dispersions and colored imaging fluids containing the surface modified pigments provided herein can be produced using any method known in the art to produce pigment dispersions and colored imaging fluids, particularly colored electro-optical imaging fluids (*e.g.,* see U.S. Pat. Nos. 8,313,576, 8,258,231, 8,018,640, 7,804,561, 6,211,347, 5,663,224, 5,449,582 and 5,034,508 and U.S. Pat. Pub. Nos. US2012/0307347, US2007/0205979 and US2007/0187242). For example, in preparing the dispersions and the colored imaging fluids, the surface modified pigments provided herein can be premixed with an appropriate solvent and optionally with any other components, for example, in a vessel equipped with a high-speed stirrer with rotation velocity in a range of 500-12,000 RPM. The mixture then can be milled using known milling equipment, such as but not limited to, a rotating ball mill, vibration mill, agitated horizontal or vertical media mill, basket mill, rotor/stator type machines, or attritors. The mixture can be milled by batch operation or by way of recirculation and/or discrete pass.

Any known type and size of media can be used, for example, glass, ceramics, sand, polymeric, and metal media with sizes in a range from 15 µm to about 10 cm. Media shape can be circular, regular, irregular, or a mixture thereof. Typical equipment includes machines manufactured by Eiger, Netzsch, Buhler, Premier, Hockmeyer, Chicago Boiler, Union Process, IKA Works, Baker-Perkins, Paul-O-Abbe etc.

The duration of the milling process depends on desired particle size, type of milling equipment, and employed media. For example, the milling process can be from a few minutes to 72 hours or longer, or can be from 15 minutes to 6 hours. The milling process can be performed at any temperature, such as from about 5°C to 120°C. Any combination of milling time and temperature can be selected. After milling, the pigment dispersion optionally can be filtered or centrifuged or both to remove large pigment particles, broken media, or contaminants.

In the dispersions provided herein, the surface modified pigment of the invention can be present in an amount at or about 1 wt% to at or about 60 wt%, or at or about 2 wt% to at or about 50 wt%, or at or about 3 wt% to at or about 40 wt%, or at or about 5 wt% to at or about 30 wt% based on the weight of the dispersion. Pigment concentrations below 1% are possible but are not economical to mill. Pigment concentrations above 60% are possible but typically will not provide acceptable rheological behavior. In some instance, the surface modified pigment is present in an amount of 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 26 wt%, 27 wt%, 28 wt%, 29 wt%, 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, 45 wt%, 46 wt%, 47 wt%, 48 wt%, 49 wt%, 50 wt%, 51 wt%, 52 wt%, 53 wt%, 54 wt%, 55 wt%, 56 wt%, 57 wt%, 58 wt% or 60 wt%, based on the weight of the dispersion.

In the imaging fluids provided herein, the surface modified pigment of the invention can be present in an amount of at about 0.01 wt% to at or about 30 wt%, or at about 0.1 wt% to at or about 25 wt%, or at about 0.2 wt% to at or about 20 wt%, based on the weight of the imaging fluid. Pigment concentrations below 0.01% are possible but usually will not provide adequate color contribution. Pigment concentrations above 30% are possible but typically will not provide acceptable rheological behavior and will demonstrate inadequate performance in electronic devices. In some instances, the surface modified pigment is present in an amount of 0.01 wt%, 0.02 wt%, 0.03 wt%, 0.04 wt%, 0.05 wt%, 0.06 wt%, 0.07 wt%, 0.08 wt%, 0.09 wt%, 0.1 wt %, 0.2 wt%, 0.3 wt%, 0.4 wt%, 0.5 wt%, 0.6 wt%, 0.7 wt%, 0.8 wt%, 0.9 wt%, 1 wt%, 1.25 wt%, 1.5 wt%, 1.75 wt%, 2 wt%, 2.25 wt%, 2.5 wt%, 2.75 wt%, 3 wt%, 3.25 wt%, 3.5 wt%, 3.75 wt%, 4 wt%, 4.25 wt%, 4.5 wt%, 4.75 wt%, 5%, 5.25 wt%, 5.5%, 5.75 wt%, 6 wt%, 6.25 wt%, 6.5 wt%, 6.75 wt%, 7 wt%, 7.25 wt%, 7.5 wt%, 7.75 wt%, 8 wt%, 8.25 wt%, 8.5 wt%, 8.75 wt%, 9 wt%, 9.25 wt%, 9.5 wt%, 9.75 wt%, 10 wt%, 10.25 wt%, 10.5 wt%, 10.75 wt%, 11 wt%, 11.25 wt%, 11.5 wt%, 11.75 wt%, 12 wt%, 12.25 wt%, 12.5 wt%, 12.75 wt%, 13 wt%, 13.25 wt%, 13.5 wt%, 13.75 wt%, 14 wt%, 14.25 wt%, 14.5 wt%, 14.75 wt%, 15%, 15.25 wt%, 15.5%, 15.75 wt%, 16 wt%, 16.25 wt%, 16.5 wt%, 16.75 wt%, 17 wt%, 17.25 wt%, 17.5 wt%, 17.75 wt%, 18 wt%, 18.25 wt%, 18.5 wt%, 18.75 wt%, 19 wt%, 19.25 wt%, 19.5 wt%, 19.75 wt%, 20 wt%, 20.25 wt%, 20.5 wt%, 20.75 wt%, 21 wt%, 21.25 wt%, 21.5 wt%, 21.75 wt%, 22 wt%, 22.25 wt%, 22.5 wt%, 22.75 wt%, 23 wt%, 23.25 wt%, 23.5 wt%, 23.75 wt%, 24 wt%, 24.25 wt%, 24.5 wt%, 24.75 wt%, 25%, 25.25 wt%, 25.5%, 25.75 wt%, 26 wt%, 26.25 wt%, 26.5 wt%, 26.75 wt%, 27 wt%, 27.25 wt%, 27.5 wt%, 27.75 wt%, 28 wt%, 28.25 wt%, 28.5 wt%, 28.75 wt%, 29 wt%, 29.25 wt%, 29.5 wt%, 29.75 wt% or 30 wt% based on the weight of the imaging fluid composition.

Pigment particles in the dispersion and imaging fluid can have a mean weight diameter determined from dynamic light scattering particle size analysis ranging from about 10 nm to about 5 µm. In some instances, particle size is in the range of at or about 20 nm to at or about 500 nm. In some instances, particle size is in the range of at or about 50 nm to at or about 300 nm, or at or about 30 nm to at or about 300 nm, or at or about 10 nm to at or about 100 nm, or at or about 100 nm to at or about 400 nm. The dynamic viscosity of the dispersion and the colored imaging fluid is preferably from about 0.5 cPs to 2,000 cPs at 25°C, more preferably from about 1 cPs to 500 cPs at 25°C, and most preferably from about 1 cPs to 100 cPs at 25°C, when measured using a Brookfield Viscometer LVDV- II + Pro at T=25°C, rotation speed 30 RPM, using the appropriate spindle.

The dispersions and imaging fluids of the embodiment demonstrate excellent stability, exhibiting a permanence of the essential dispersion properties, such as particle size distribution, rheological behavior, and color. The stability of the imaging fluid in addition to aforementioned properties also includes permanence of interfacial surface tension and proper functioning in electronic device. The experimental methods for evaluation of the dispersions and fluids are described below.

### VI. TEST METHODS

The viscosity of the dispersions and color imaging fluids provided herein can be measured using any method known in the art. For example, the viscosity values of the dispersions and color imaging fluids provided herein were measured using a Brookfield Viscometer LVDV- II + Pro at T=25°C, rotation speed 30RPM, and appropriate spindle. Other rheometers and shear rates also can be used to measure viscosity.

The particle size distribution of the pigment particles can be measured using any method known in the art. For the particle size values discussed herein, particle size distribution was determined using particle size analyzers working on the principle of dynamic light scattering, using particle size measuring equipment available from Microtrac, Inc. (Montgomeryville, PA), including the NPA 250 and Microtrac™ UPA.

The stability of the dispersions and imaging fluids was evaluated by comparison of particle size distribution, viscosity, and microscopy images of freshly made sample to a sample subjected to accelerated aging. The accelerated aging test was performed by placing a sample of the dispersion or imaging fluid in a closed container for one week at 80°C. The dispersion is considered to be stable if there is no significant difference between parameters of the initial and aged samples.

The colored imaging fluids were tested for electrowetting capability by evaluating change in contact angle on a hydrophobic dielectric and electrode substrate with voltage application. In an exemplary test, indium tin oxide (ITO) coated glass was covered with a combination of Parylene C dielectric and Cytonix FluoroPel™ 1601V hydrophobic fluoropolymer as the ambient. Alternately, the dielectric layer can contain Al₂O₃ and Asahi Cytop CTL-809M hydrophobic fluoropolymer. A conductive wire attached at one point to the ITO layer of the substrate served as the ground electrode. The substrate was submerged in a transparent non-polar solvent and a drop of colored fluid having a polar fluid was placed on the surface. Direct or alternating current in increments of 2V was supplied to the drop through a tungsten cat whisker probe and the contact angle of the drop at each voltage was recorded and calculated using VCA Optima software program (AST Products Inc., Billerica, MA). A fluid was considered electrowetting capable if the contact angle decreased upon application of voltage so that the final contact angle was less than 90° (*e.g.,* see Balaji Raj et al., "Ion and Liquid Dependent Dielectric Failure in Electrowetting Systems", Langmuir 25(20): 12387-12392 (2009).

The performance of the colored fluid was also evaluated in a proprietary electrowetting device (described in K. Blankenbach et al., "Novel Electrowetting Displays", SID International Symposium (2007), Book 1, P-111, p.p. 618-621. Drops of colored fluid immersed into non-polar solvent were driven between two chambers of the device by switching voltage. Ideally, the drops should move without hesitation, sticking to the surface of the cell, splitting, forming small satellites, or exhibiting pigment flocculation at least for four weeks at room temperature. In the course of the measurements, observations were made to detect the surface staining by pigment particles, formation of gas bubbles, or change of fluid color.

### VII. APPLICATIONS

The surface modified pigments provided herein, as well as dispersions and colored fluids containing the modified pigments, can be used to formulate any composition that is colored of that includes pigments or dyes or any combination thereof. Exemplary of such compositions are inks, including inkjet inks and aerosol inks, coatings, toners, color filters, paints, cosmetics, plastics and fluids for electrowetting, electrofluidic, or electrophoretic devices.

The surface modified pigments and pigment dispersions provided herein are well-suited for ink and coating compositions. The inks or coatings can be formulated to have a viscosity suitable for deposition by any deposition process known in the art. Exemplary deposition processes include flexographic, gravure, roller coating, cascade coating, curtain coating, slot coating, electro coating, wire bound bar, aerosol, and digital deposition processes, including inkjet printing. A preferred deposition process is inkjet printing, where the ink or coating can be formulated to have the appropriate viscosity, such as 100 cP or less, or 50 cP or less, or 20 cP or less, or 10 cP or less when measured at 25°C at a shear rate of about 100 sec⁻¹ to 200 sec⁻¹.

The surface modified pigments and pigment dispersions provided herein are well-suited for color cosmetic compositions. Various cosmetic products, such as make-up foundations, blushes, eye shadows and lipsticks are colored using pigments. The formed cosmetic products containing the pigments can be formulated to be in any of various forms, including oil-in-water emulsions, water-in-oil emulsions and anhydrous compositions. The surface modified pigments and pigment dispersions provided herein allow preparation of these compositions while maintaining even dispersion of the surface treated pigments, minimizing or eliminating pigment particle agglomeration in the final product.

The surface modified pigments provided herein can be included in electronic displays that operate by principles of electrowetting, electrofluidics, and/or electrophoresis. Such devices can contain an imaging fluid made with a surface modified pigment of the present invention. In one specific example, the colored imaging fluids containing a surface modified pigment provided herein can be used in a display that operates according to electrowetting principles to create an image. Generally, an electrowetting device contains a plurality of individual pixels, which are filled with a polar fluid and a non-polar fluid, which are immiscible. A voltage applied to, or removed from, each pixel causes movement of the polar fluid and thereby changes the appearance or state of the pixel from, for example, a colored state to a non-colored or transparent state.

Examples of electrowetting devices that work with imaging fluids, in which any of the surface modified pigments provided herein could be included, are described in U.S. Pat. Pub. Nos. US20123/07347, US2012/154896 and US2012/092753 and International Pat. Appl. Publ. Nos. WO2012/102802, WO2012/031093, WO2012/091776 and WO2011/020020, and K. Blankenbach et al., "Novel Electrowetting Displays", SID International Symposium, 2007, Book 1, P-111, p.p. 618-621.

In another specific example, the colored imaging fluids provided herein, which include the surface modified pigments as described herein, can be used in a display that operates according to principles of electrophoresis to create an image. Examples of electrophoretic devices that work with imaging fluids, in which any of the surface modified pigments provided herein could be included, are described in U.S. Pat. Pub. No. US2012/307347 and International Pat. Pub. Nos. WO2012/102802, and WO2012/031093.

### VIII. EXAMPLES

The following examples, including experiments and results achieved, are provided for illustrative purposes only and are not to be construed as limiting the scope of the invention.

### Example 1

A black pigment dispersion was prepared by mixing 100 parts of NIPex® 160 (a pigment carbon black produced on the basis of the Degussa Gas Black process and available from Orion Engineered Carbons, Frankfurt am Main, Germany), 500 parts of deionized (DI) water and 50 parts of isopropanol followed by homogenization at ambient temperature for one hour using a high speed mixer at 3000 RPM. Separately, a surface modifying compound was prepared by mixing 89.0 parts of Surfonamine® L-200 (a hydrophilic polyether monoamine available from Huntsman International LLC, The Woodlands, TX) and 11.0 parts of 3-isocyanatopropyltriethoxysilane (available from Gelest, Inc., Morrisville, PA) at ambient temperature for one hour, the reaction mass then was heated to 80°C for 0.5 hour and stirred at this temperature for two hours. The resulting surface modifying additive then was added to the pigment dispersion and the slurry was mixed for two hours at 80°C and then spray dried in a Büchi Mini Spray Dryer B-191(Büchi Corporation, New Castle, DE) at pump rate 30%, inlet temperature 215°C and outlet temperature 142°C, yielding a surface modified pigment.

A dispersion containing the surface modified pigment then was prepared. 25 parts of the surface modified pigment and 225 parts of gamma-butyrolactone were pre-mixed using a high-speed mixer and then milled for two hours in an Eiger mill (Engineered Mills, Inc., Grayslake, IL) with 0.5 mm ceramic media. Mean weight particle diameter of the pigment was determined from dynamic light scattering particle size analysis and determined to be about 185 nm. A portion of the dispersion was placed in a closed container, which was placed in an oven at 80°C for accelerated ageing testing. After maintaining the dispersion at 80°C for 7 days, particle size distribution was measured and did not demonstrate any significant changes. To prepare an imaging fluid, the dispersion was diluted with gamma-butyrolactone to reduce the pigment content to about 1%. The resulting imaging fluid demonstrated excellent color and satisfactory electrowetting properties for 4+ weeks.

### Comparative Example 1a:

A comparative pigment dispersion was prepared using 22 parts of NIPex® 160 (available from Orion Engineered Carbons, Frankfurt am Main, Germany), 0.5 parts of Solsperse® 12,000, a pigmentary synergist agent, and 2.5 parts of Solsperse® 20,000 a polymeric dispersant (both available from Lubrizol, Ltd., Manchester, UK) and 225 parts of gamma-butyrolactone were pre-mixed using high speed mixer and then milled for two hours in an Eiger mill with 0.5 mm ceramic media. Mean weight particle diameter determined from dynamic light scattering particle size analysis was about 145 nm. A portion of the dispersion was placed in a closed container, which was placed in an oven at 80°C for accelerated ageing testing. After maintaining the dispersion at 80°C for 7 days, particle size distribution did not demonstrate any significant changes. To prepare an imaging fluid, the dispersion was diluted with gamma-butyrolactone to bring pigment content to about 1%. This imaging fluid demonstrated excellent color but functioned in an electrowetting device only for a few minutes. Surfaces of the device were stained with black particles, indicating unsatisfactory performance.

### Example 2

A red pigment dispersion was prepared by mixing 22.5 parts of PR177 (pigment red 177 available from DIC Corp.), 160 parts of DI water, and 7 parts of 35% hydrochloric acid at ambient temperature for one hour. Then 11 parts of sodium nitrite as 38.5% aqueous solution were added drop-wise to the slurry. After addition of all of the sodium nitrite, the pigment slurry was heated to 70°C and stirred for one hour and the pigment was recovered via filtration. The pigment was washed with DI water until the conductivity of the filtrate was lower than 20µS/cm with a pH=7.5. The pigment press-cake then was re-slurred in DI water at ambient temperature and stirred for one hour. Separately, 6.9 parts of Surfonamine® L-200 (available from Huntsman International, LLC, The Woodlands, TX) and 0.6 parts of 3-isocyanatopropyltriethoxysilane (available from Gelest, Inc., Morrisville, PA) were mixed at ambient temperature for one hour, the reaction mass then was heated to 80°C for 0.5 hour and stirred at this temperature for two hours. The resulting surface modifying additive then was added to the pigment dispersion and the mixture was mixed for two hours at 80°C and then dried in the oven overnight at a temperature 100°C. The dry material was ground using an Osterizer® blender.

A dispersion containing the surface modified pigment then was prepared. 25 parts of the surface modified pigment and 225 parts of propylene carbonate (available from Huntsman International, LLC, The Woodlands, TX) were pre-mixed using a high speed mixer and then milled for two hours in an Eiger mill with 0.5 mm ceramic media. Mean weight particle diameter determined from dynamic light scattering particle size analysis was about 215 nm. A portion of the dispersion was placed in a closed container, which was placed in an oven at 80°C for accelerated ageing testing. After maintaining the dispersion at 80°C for 7 days, particle size distribution did not demonstrate any significant changes. To prepare an imaging fluid, the dispersion was diluted with propylene carbonate to reduce the pigment content to about 1.0%. This fluid demonstrated excellent color and satisfactory electrowetting properties for 4+ weeks.

### Comparative Example 2a:

A comparative pigment dispersion was prepared using 22.5 parts of PR177 (available from DIC Corp.) and 150 parts of DI water were stirred at ambient temperature for one hour. Separately, 6.9 parts of Surfonamine® L-300 (available from Huntsman) and 0.6 parts of 3-isocyanatopropyltriethoxysilane (available from Gelest, Inc., Morrisville, PA) were mixed at ambient temperature for one hour, reaction mass was then heated up to 80°C for 0.5 hour and stirred at this temperature for two hours. The resulting surface modifying additive then was added to the pigment dispersion and the mixture was mixed for two hours at 80°C and then dried in the oven overnight at temperature 100°C. The dry material was ground using Osterizer® blender.

A dispersion containing the modified pigment then was prepared. 25 parts of the modified pigment and 225 parts of propylene carbonate (available from Huntsman) were pre-mixed using a high speed mixer and then milled for two hours in an Eiger mill with 0.5 mm ceramic media. Mean weight particle diameter determined from dynamic light scattering particle size analysis was about 303 nm. A portion of the dispersion was placed in a closed container, which was placed in an oven at 80°C for accelerated ageing testing. After maintaining the dispersion at 80°C for 7 days, particle size mean weight particle diameter was 450 nm indicating that the dispersion is not stable. To prepare an imaging fluid, the dispersion was diluted with propylene carbonate to reduce the pigment content to about 1.0%. This fluid did not move at all in electrowetting device, indicating unsatisfactory performance.

### Example 3

A black pigment dispersion was prepared by mixing 115 parts of NIPex® 160 (a pigment carbon black available from Orion Engineered Carbons, Frankfurt am Main, Germany), 100 parts of n-heptane, 50 parts of DI water and 390 parts of isopropanol were mixed and homogenized at ambient temperature for one hour using a high speed mixer at 3000 RPM. Separately, 154.0 parts of Kerocom® PIBA 03 (a polyisobutylene having a molecular weight Mₙ of about 1000 g/mol and that has been NH2-functionalized to an extent of about 75% by weight, supplied as a concentrate of about 65% by weight in aliphatic hydrocarbons by BASF AG (Ludwigshafen, Germany) and 14.5 parts of 3-isocyanatopropyltrimethoxysilane (available from Gelest Inc., Morrisville, PA) were mixed at ambient temperature for one hour, then the reaction mass was heated to 100°C for 0.5 hour and stirred at this temperature for two hours. The resulting surface active additive then was added to the pigment dispersion and the mixture was mixed for two hours at 80°C and then filtered, and press-cake was dried in the oven at 100°C for 12 hours. The dry material was ground using an Osterizer® blender.

A dispersion containing the surface modified pigment then was prepared. 25 parts of the surface modified pigment and 225 parts of n-tetradecane were pre-mixed using a high-speed mixer and then milled for two hours in an Eiger mill with 0.5 mm ceramic media. Mean weight particle diameter determined from dynamic light scattering particle size analysis was about 168 nm. After keeping the dispersion at 80°C for 7 days, particle size distribution did not demonstrate any significant changes. To prepare an imaging fluid, the dispersion was diluted with n-tetradecane to bring pigment content to about 5%. This fluid demonstrated excellent color and satisfactory electrowetting properties for 4+ weeks.

### Comparative Example 3a:

A comparative pigment dispersion was prepared by mixing 20 parts of NIPex® 160 (available from Orion Engineered Carbons, Frankfurt am Main, Germany), 1.0 parts of Solsperse® 5,000 and 4.0 parts of Solsperse® 19,000 (both available from Lubrizol, Ltd., Manchester, UK) and 225 parts of n-tetradecane using high speed mixer and then milled for two hours in Eiger mill with 0.5 mm ceramic media. Mean weight particle diameter determined from dynamic light scattering particle size analysis was about 150 nm. A portion of the dispersion was placed in a closed container, which was placed in an oven at 80°C for accelerated ageing testing. After maintaining the dispersion at 80°C for 7 days, particle size distribution did not demonstrate any significant changes. To prepare an imaging fluid, the dispersion was diluted with gamma-butyrolactone to reduce the pigment content to about 5%. This fluid demonstrated excellent color but did not function in the electrowetting device.

### Example 4

A black inkjet ink containing the surface modified pigment was prepared. A pigment dispersion was prepared by pre-mixing at 3,000 RPM for 30 minutes 30 parts the surface modified pigment of the Example 1 (above), 80 parts of propylene glycol, and 90 parts of deionized (DI) water. The dispersion then was milled for two hours in an Eiger mill (Engineered Mills, Inc., Grayslake, IL) with 0.5 mm ceramic media. Mean weight particle diameter of the pigment was determined from dynamic light scattering particle size analysis and determined to be about 142 nm. A portion of the dispersion was placed in a closed container, which was placed in an oven at 80°C for accelerated ageing testing. After maintaining the dispersion at 80°C for 7 days, particle size distribution was measured and did not demonstrate any significant changes. To prepare an inkjet ink, 100 parts of the dispersion was mixed with 15 parts of N-methylpyrrolidone, 25 parts of glycerol, 25 parts of 1,6- hexanediol, 1 part of Proxel® GXL (anti-microbial from Arch Chemical, Inc., Norwalk, CT), and 334 parts of DI water to reduce the pigment content to about 3%. This ink demonstrated excellent optical density and printability.

### Example 5

A red latex paint containing the surface modified pigment was prepared. A pigment dispersion was prepared by pre-mixing at 3,000 RPM for 30 minutes 15 parts the surface modified pigment of Example 2 (above), 20 parts of ethylene glycol, 10 parts of Blanc Fixe, 1 part of concentrated aqueous ammonia, and 54 parts of DI water. The dispersion then was milled for two hours in an Eiger mill (Engineered Mills, Inc., Grayslake, IL) with 0.5 mm ceramic media. Latex paint was made by mixing 5 parts of the dispersion with Porter® Paint 384 HiHide Ultra Deep Base (Porter Paints, Louisville, KY). Standard paint was prepared the same way as described but instead of the surface modified pigment of the Example 2, standard C.I.® Pigment Red 177 (available from DIC Corp.) was used and 7.5 parts of DI water were replaced with 7.5 parts of Surfynol® GA (available from Air Products, Allentown, PA). Comparing the resulting latex paint containing the surface modified pigment of Example 2 with the standard at equal pigment content, the latex paint of Example 5 containing the surface modified pigment of Example 2 had a color strength of 108%.

## Claims

1. Surface modified carbon black pigment particles, comprising:
a surface on the carbon black pigment particles containing a functional group **Q**; and
a modifying compound **M** bonded to the surface via hydrogen bonds or via a covalent bond with the functional group **Q** to form the group **-Q-M** on the surface;
wherein:
the modifying compound **M** comprises a product formed by a full or partial hydrolysis of a compound of Formula (1): 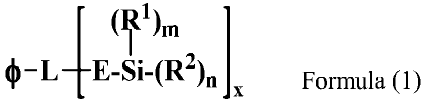 wherein:
**φ** is a linear, branched or dendritic polymeric chain having a molecular weight from about 100 to about 5,000,000;
**L** is -NR³C(O)NH-, -OC(O)NH-, -C(O)OCH₂CH(OH)CH₂-, -OCH₂CH(OH)CH₂-, -NHCH₂CH(OH)CH₂-, -alkylene-, -C(O)O-, -C(O)NR³-, -SO₂NR³-, -SO₂-, -NR³-, =N-, =N⁺-, -O- or -S-;
each **E** independently is alkylene, arylene, alkylarylene, arylalkylene, alkyleneamino, alkyleneimino, alkyleneoxyalkylene, aryleneoxy, aryleneoxyalkylene, oxaalkylene, oxyalkylene, dioxyalkylene or oxyarylene;
each **R¹** independently is H, hydroxyl, oxyalkyl, oxyalkylenearyl, halogen, acetate or amine;
each **R²** independently is alkyl, cycloalkyl, cycloheteroalkyl, aryl or alkylenearyl;
**R³** is H, alkyl, aryl or alkylaryl;
**m** = 1 to 3;
**n** = 0 to 2;
**m+n** = 3; and
**x** = 1 or 2.

2. The surface modified pigment particles of claim 1, wherein the surface comprises a plurality of functional groups **Q** that are the same or are different.

3. The surface modified pigment particles of claim 1 or 2, wherein the functional group Q is selected from among a hydroxyl, phenolic, thiol and thiophenolic group.

4. The surface modified pigment particles of any one of claims 1 to 3, wherein **-Q-M** has the following formula: 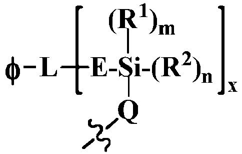 wherein:
each **Q** independently is O, oxyalkylene, S, thioalkylene, oxyarylene, thioarylene, oxyheterocyclylene, thioheterocyclylene, oxyalicyclylene or thioalicyclylene;
**m** is 1 or 2;
**n** is 0 or 1;
**m+n** = 2;
**φ**, **L**, **E**, **R¹**, **R²**, and **x** are as defined in claim 1; and
each **R¹** independently can interact with a different functional group **Q** on the pigment particle surface or with an **R¹** substituent of another modifying compound **M.**

5. The surface modified pigment particles of any one of claims 1 to 3, wherein modifying compound **M** interacts with two functional groups **Q** on the pigment particle surface to form the moiety **-Q-M-Q-** having one of the following formula or a combination thereof: 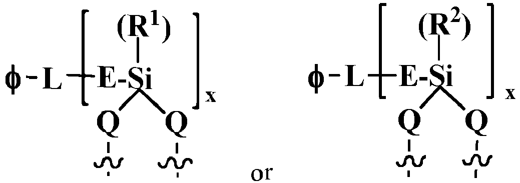 wherein:
each **Q** independently is O, oxyalkylene, S, thioalkylene, oxyarylene, thioarylene, oxyheterocyclylene, thioheterocyclylene, oxyalicyclylene or thioalicyclylene;
each **R¹** can interact with a different functional group **Q** on the pigment particle surface or with an **R¹** substituent of another modifying compound **M;** and
**φ**, **L**, **E**, **R¹**, **R²** and **x** are as defined in claim 1.

6. The surface modified pigment particles of any one of claims 1 to 3, wherein at least two modifying compounds **M** interact with each other and interact with different functional groups **Q** on the pigment particle surface to form the moiety **-Q-M-M-Q-**.

7. The surface modified pigment particles of claim 6, wherein the moiety **-Q-M-M-Q-** has the following formula: 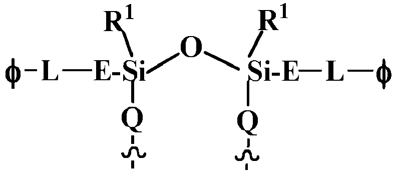 wherein:
each **Q** independently is O, oxyalkylene, S, thioalkylene, oxyarylene, thioarylene, oxyheterocyclylene, thioheterocyclylene, oxyalicyclylene or thioalicyclylene;
**φ, L, E** and **R¹** are as described in claim 1; and
each **R¹** can interact with a different functional group **Q** on the pigment particle surface or with an **R¹** substituent of another modifying compound **M.**

8. The surface modified pigment particles of any one of claims 1 to 7, wherein the functional group **Q** is attached to the surface by a covalent, ionic or hydrogen bond.

9. The surface modified pigment particles of any one of claims 1 to 7, wherein the functional group **Q** is attached to the surface via irreversible adsorption onto the surface.

10. The surface modified pigment particles of any one of claims 1 to 9, wherein **φ** has a molecular weight from about 1,000 to about 100,000.

11. The surface modified pigment particles of any one of claims 1 to 10, wherein **φ** is selected from among a polyalkylene, polyoxyalkylene, polyimine, polyester, polyamide, polyimide, polyurethane, polyuria, polyacrylate, polyacrylonitrile, polysulfone, polystyrene, polyvinyl halogenide, polyvinylidene halogenides, polyvinyl alcohol, polyvinyl acetate, polyvinylpyrrolidone, polyvinyl butyral, polycarbonate, polyether sulfone, poly(arylene/ alkylene) sulfide, polyepoxide, polyaldehyde, polyketone, polyether ketone, pheno 1-formaldehyde, polyethylene terephthalate, polybutylene terephthalate, hydrocarbon resin, and metalorganic polymer containing at least one atom of silicon and/or germanium, and a random, block, dendritic, or combination co-polymer thereof.

12. The surface modified pigment particles of any one of claims 1 to 11, wherein **φ** is selected from among polyethylene, polypropylene, polybutylene, polyisobutylene, polyisoprene, polyacetal, polyethylene glycol, polypropylene glycol, polybutylene glycol, polymethacrylate, polyalkyl/aryl acrylate, polyvinyl chloride, polyvinyl fluoride, polyvinyl bromine, polysiloxane; or a random, block, dendritic, or combination co-polymer thereof.

13. The surface modified pigment particles of any one of claims 1 to 12, wherein the compound of Formula (1) is the reaction product of a compound of Formula (2): 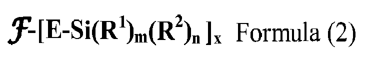 with a compound of formula (3) 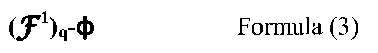 wherein:
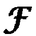 is selected from among -NCO, -NR⁴R⁵, -N⁺R⁴R⁵R⁶, -SO³⁻, -OH, -SH, R⁷, -COOH, -COR⁷, -SO₂R⁷, epoxy, acrylate and vinyl;
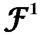 is selected from among -NCO, -NR⁴R⁵, -N⁺R⁴R⁵R⁶, -SO³⁻, -OH, -SH, R⁷, -COOH, -COR⁷, -SO₂R⁷, epoxy, acrylate and vinyl;
each of **R⁴**, **R⁵** and **R⁶** independently is H or alkyl;
**R⁷** is F, Cl or Br;
**q**=1 to 100; and
each of **φ**, **E**, **R¹**, **R²**, **m**, **n** and **x** are as described in claim 1, where functional group 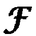 of the compound of Formula (2) reacts with a functional group 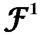 of the compound of formula (3).

14. The surface modified pigment particles of any one of claims 1 to 13, wherein the pigment is C.I. Pigment Black 7.

15. The surface modified pigment particles of any one of claims 1 to 14, wherein the modifying compound **M** is present in an amount of from at or about 0.1% to at or about 95% based on the weight of the surface modified particles.

16. The surface modified pigment particles of any one of claims 1 to 15, wherein the pigment particles have a mean weight diameter of from 10 nm to 5 µm.

17. A pigment dispersion composition, comprising the surface modified pigment particles of any one of claims 1 to 16.

18. The dispersion composition of claim 17, further comprising one or more of a polar solvent, non-polar solvent, additional organic pigment, additional inorganic pigment, surfactant, synergist, additive for electrical conductivity control, polymeric dispersant, plasticizer, resin, defoamer and charge director and any combination thereof.

19. The dispersion composition of claim 18, wherein the polar solvent is selected from among water, a glycol, a polyglycol, an alcohol, a polyol, an ether, an ester, a ketone, a lactam, a pyrrolidone, a carbonate, a sulfone, a sulfoxide, an amide, a heterocyclic amine, a nitrile, an aliphatic acid acetal, a carbamate, an aldehyde and a chlorinated hydrocarbon and any combination thereof, or
the polar solvent comprises a combination of functions selected from among alcohol, ketone, ether, ester, amine, nitrile, amide, sulfoxide, carboxylic acid, aldehyde and halogen, or
the polar solvent is selected from among water, ethylene glycol, 1,2-propylene glycol, 1,3-propylene glycol, 1,4-butylene glycol, diethylene glycol, dipropylene glycol, glycerin, ethylene carbonate, propylene carbonate, 1,2-butylene carbonate, 1,2-cyclohexane carbonate, glycerin carbonate, dimethyl carbonate, diethyl carbonate, acetophenone, pyridine, dimethyl malonate, diacetone alcohol, hydroxypropyl carbamate, beta-hydroxyethyl carbamate, N-methyl formamide, N-methyl acetamide, dimethylsulfoxide, sulfolane, 2-pyrrolidone, N-methyl-2-pyrrolidone, N-cyclohexyl-2-pyrrolidone, acetonyl acetone, cyclohexanone, ethyl acetoacetate, ethyl-L-lactate, pyrrole, N-methyl pyrrole, N-ethyl pyrrole, 4*H*-pyran-4-one, 1,3-dimethyl-2-imidazolidinone, morpholine, N-methylmorpholine, N-ethyl-morpholine, N-formylmorpholine, beta-propiolactone, beta-valerolactone, beta-hexa-lactone, gamma-butyrolactone, gamma-valerolactone, gamma-hexalactone, gamma-heptalactone, gamma-octalactone, gamma-nonalactone, gamma-decalactone, delta-valero-lactone, delta-hexalactone, delta-heptalactone, delta-octalactone, delta-nonalactone, delta-decalactone, delta-tetradecalactone and delta-octadecalactone and any combination thereof.

20. The dispersion composition of claim 18, wherein the non-polar solvent is selected from among one or a combination of non-substituted, substituted, linear, branched and cyclic compounds including one or more silicon and/or germanium atoms, aliphatic or aromatic hydrocarbons, partially hydrogenated aromatic hydrocarbons, alicyclic or aromatic heterocyclic compounds and derivatives thereof containing a halogen, nitro, nitroso, epoxy, phosphate, or cyano group, a fatty alcohol, a carboxylic acid, and ethers, esters, and amides thereof, or
the non-polar solvent is selected from among decane, dodecane, tetradecane, cyclohexane, decalin, tetralin, octadecanol, a silicone oil, a linear siloxane, a cyclic siloxane, a branched aliphatic hydrocarbon, a petroleum solvent, kerosene, a mineral spirit, tetradecane epoxide and fluorinated hydrocarbons and combinations thereof.

21. The dispersion composition of any one of claims 17 to 20, wherein the amount of surface modified pigment is in the amount of from 1% to 60% based on the weight of the dispersion composition, or
the amount of surface modified pigment is in the amount of from 5% to 30% based on the weight of the dispersion composition.

22. The dispersion composition of any one of claims 17 to 21 having a dynamic viscosity of from at or about 0.5 cP to at or about 2,000 cP at 25°C at a rotational speed of 30 rpm.

23. Use of the surface modified pigment particles of any one of claims 1 to 16 or a dispersion of any one of claims 17 to 22 for the preparation of a color filter, a liquid toner, an ink, a coating, a paint, a cosmetic, a plastic or a color imaging fluid for an electronic display, wherein the ink is preferably an inkjet ink.

24. A color imaging fluid for electrowetting and/or electrophoresis electronic displays, comprising the surface modified pigment particles of any one of claims 1 to 16 or the dispersion of any one of claims 17 to 22, wherein the amount of surface modified pigment particles is in the range of at or about 0.01% to at or about 30% by weight of the color imaging fluid, or
wherein the amount of surface modified pigment particles is in the range of at or about 0.2% to at or about 20% by weight of the color imaging fluid.

25. The color imaging fluid of claim 24, wherein the surface modified pigment particles have a mean weight diameter of from at or about 10 nm to at or about 5 µm, or from at or about 20 nm to at or about 500 nm, or from at or about 30 nm to at or about 300 nm.

26. The color imaging fluid of claim 24 or 25 having a dynamic viscosity of from at or about 0.5 cP to at or about 2,000 cP at 25°C measured at a rotational speed of 30 rpm.

27. An electronic display or electronic device that operates by principles of electrowetting, electrofluidics, and/or electrophoresis, wherein the device comprises the surface modified pigment particles of any one of claims 1 to 16 or the imaging fluid of any one of claims 24 to 26.

28. A cosmetic composition, comprising the surface modified pigment particles of any one of claims 1 to 16 or the dispersion of any one of claims 17 to 22.

29. An ink or coating, comprising the surface modified pigment particles of any one of claims 1 to 16 or the dispersion of any one of claims 17 to 22.

30. The ink of claim 29 that is an inkjet ink.

## Patentansprüche

1. Oberflächenmodifizierte Rußpigmentpartikel, umfassend:
eine Oberfläche auf den Rußpigmentpartikeln, die eine funktionelle Gruppe Q enthält; und
eine Modifizierungsverbindung M, die über Wasserstoffbrückenbindungen oder über eine kovalente Bindung mit der funktionellen Gruppe Q an die Oberfläche gebunden ist und so die Gruppe -Q-M an der Oberfläche ausbildet;
wobei:
die Modifizierungsverbindung M ein Produkt umfasst, das durch vollständige oder partielle Hydrolyse einer Verbindung mit der Formel (1) gebildet wird: 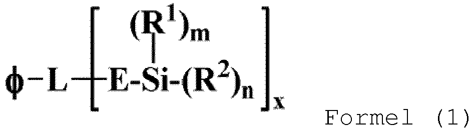 wobei:
φ eine lineare, verzweigte oder dendritische Polymerkette mit einer Molekülmasse zwischen ungefähr 100 und ungefähr 5.000.000 ist;
L -NR³C(O)NH-, -OC(O)NH-, -C(O)OCH₂CH(OH)CH₂-, - OCH₂CH(OH)CH₂-, -NHCH₂CH (OH)CH₂-, -alkylen-, -C(O)O-, - C(O)NR³-, -SO₂NR³-, -SO₂-, -NR³-, =N-, =N⁺-, -O- oder -S-ist;
jedes E unabhängig Alkylen, Arylen, Alkylarylen, Arylalkylen, Alkylenamino, Alkylenimino, Alkylenoxyalkylen, Arylenoxy, Arylenoxyalkylen, Oxaalkylen, Oxyalkylen, Dioxyalkylen oder Oxyarylen ist;
jeder R¹ unabhängig H, Hydroxyl, Oxyalkyl, Oxyalkylenaryl, Halogen, Acetat oder Amin ist;
jeder R² unabhängig Alkyl, Cycloalkyl, Cycloheteroalkyl, Aryl oder Alkylenaryl ist;
R³ H, Alkyl, Aryl oder Alkylaryl ist;
m = 1 bis 3;
n = 0 bis 2;
m+n = 3; und
x = 1 oder 2.

2. Oberflächenmodifizierte Pigmentpartikel nach Anspruch 1, wobei die Oberfläche eine Vielzahl von funktionellen Gruppen Q umfasst, die identisch oder unterschiedlich sind.

3. Oberflächenmodifizierte Pigmentpartikel nach Anspruch 1 oder 2, wobei die funktionelle Gruppe Q aus einer Hydroxyl-, Phenol-, Thiol- und Thiophenolgruppe ausgewählt ist.

4. Oberflächenmodifizierte Pigmentpartikel nach einem der Ansprüche 1 bis 3, wobei -Q-M folgende Formel aufweist: 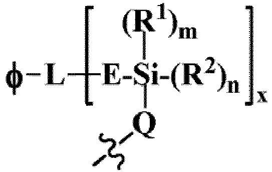 wobei:
jedes Q unabhängig O, Oxyalkylen, S, Thioalkylen, Oxyarylen, Thioarylen, Oxyheterocyclylen, Thioheterocyclylen, Oxyalicyclylen oder Thioalicyclylen ist;
m 1 oder 2 ist;
n 0 oder 1 ist;
m+n = 2;
φ, L, E, R¹, R² und x der Definition in Anspruch 1 entsprechen; und
jeder R¹ unabhängig mit einer anderen funktionellen Gruppe Q auf der Pigmentpartikeloberfläche oder mit einem R¹-Substituenten einer weiteren Modifizierungsverbindung M wechselwirken kann.

5. Oberflächenmodifizierte Pigmentpartikel nach einem der Ansprüche 1 bis 3, wobei die Modifizierungsverbindung M mit zwei funktionellen Gruppen Q auf der Pigmentpartikeloberfläche wechselwirkt und so die Komponente -Q-M-Q- ausbildet, die eine der folgenden Formeln oder eine Kombination daraus aufweist: 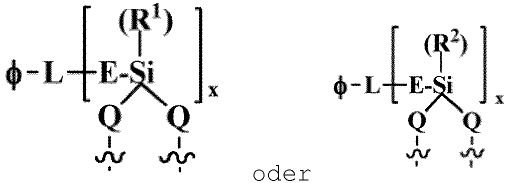 wobei:
jedes Q unabhängig O, Oxyalkylen, S, Thioalkylen, Oxyarylen, Thioarylen, Oxyheterocyclylen, Thioheterocyclylen, Oxyalicyclylen oder Thioalicyclylen ist;
jeder R¹ unabhängig mit einer anderen funktionellen Gruppe Q auf der Pigmentpartikeloberfläche oder mit einem R¹-Substituenten einer weiteren Modifizierungsverbindung M wechselwirken kann; und
φ, L, E, R¹, R² und x der Definition in Anspruch 1 entsprechen.

6. Oberflächenmodifizierte Pigmentpartikel nach einem der Ansprüche 1 bis 3, wobei mindestens zwei Modifizierungsverbindungen M miteinander wechselwirken und mit unterschiedlichen funktionellen Gruppen Q auf der Pigmentpartikeloberfläche wechselwirken und so die Komponente -Q-M-M-Q- ausbilden.

7. Oberflächenmodifizierte Pigmentpartikel nach Anspruch 6, wobei die Komponente -Q-M-M-Q- folgende Formel aufweist: 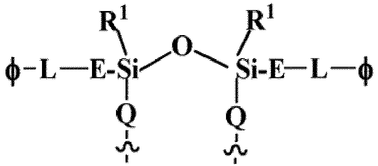 wobei:
jedes Q unabhängig O, Oxyalkylen, S, Thioalkylen, Oxyarylen, Thioarylen, Oxyheterocyclylen, Thioheterocyclylen, Oxyalicyclylen oder Thioalicyclylen ist;
φ, L, E und R¹ der Beschreibung in Anspruch 1 entsprechen; und
jeder R¹ unabhängig mit einer anderen funktionellen Gruppe Q auf der Pigmentpartikeloberfläche oder mit einem R¹-Substituenten einer weiteren Modifizierungsverbindung M wechselwirken kann.

8. Oberflächenmodifizierte Pigmentpartikel nach einem der Ansprüche 1 bis 7, wobei die funktionelle Gruppe Q über eine kovalente Bindung, Ionenbindung oder Wasserstoffbrückenbindung an der Oberfläche befestigt ist.

9. Oberflächenmodifizierte Pigmentpartikel nach einem der Ansprüche 1 bis 7, wobei die funktionelle Gruppe Q mittels unumkehrbarer Adsorption an der Oberfläche befestigt ist.

10. Oberflächenmodifiziertes Pigmentpartikel nach einem der Ansprüche 1 bis 9, wobei φ eine Molekülmasse zwischen ungefähr 1.000 und ungefähr 100.000 aufweist.

11. Oberflächenmodifiziertes Pigmentpartikel nach einem der Ansprüche 1 bis 10, wobei φ ausgewählt ist aus einem Polyalkylen, Polyoxyalkylen, Polyimin, Polyester, Polyamid, Polyimid, Polyurethan, Polyharnstoff, Polyacrylat, Polyacrylonitril, Polysulfon, Polystyrol, Polyvinylhalogenid, Polyvinylidenhalogenid, Polyvinylalkohol, Polyvinylacetat, Polyvinylpyrrolidon, Polyvinylbutyral, Polycarbonat, Polyethersulfon, Poly(arylen/alkylen)sulfid, Polyepoxid, Polyaldehyd, Polyketon, Polyetherketon, Phenol-Formaldehyd, Polyethylenterephthalat, Polybutylenterephthalat, Kohlenwasserstoffharz, und einem metallorganischen Polymer, das mindestens ein Atom Silicium und/oder Germanium enthält, und einem Copolymer mit zufälliger Verteilung, einem Block-Copolymer, einem dendritischen Copolymer oder kombinierten Copolymer davon.

12. Oberflächenmodifiziertes Pigmentpartikel nach einem der Ansprüche 1 bis 11, wobei φ ausgewählt ist aus Polyethylen, Polypropylen, Polybutylen, Polyisobutylen, Polyisopren, Polyacetal, Polyethylenglycol, Polypropylenglycol, Polybutylenglycol, Polymethacrylat, Polyalkyl/arylacrylat, Polyvinylchlorid, Polyvinylfluorid, Polyvinylbromin, Polysiloxan; oder einem Copolymer mit zufälliger Verteilung, einem Block-Copolymer, einem dendritischen Copolymer oder kombinierten Copolymer davon.

13. Oberflächenmodifizierte Pigmentpartikel nach einem der Ansprüche 1 bis 12, wobei die Verbindung mit der Formel (1) das Reaktionsprodukt aus einer Verbindung mit der Formel (2): 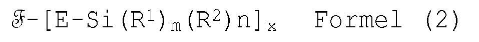 mit einer Verbindung mit der Formel (3) 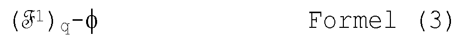 ist, wobei:
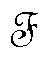 ausgewählt ist aus -NCO, -NR⁴R⁵, -N⁺R⁴R⁵R⁶, -SO³-, -OH, -SH, R⁷, -COOH, -COR⁷, -SO₂R⁷, Epoxy, Acrylat und Vinyl;
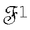 ausgewählt ist aus -NCO, -NR⁴R⁵, -N⁺R⁴R⁵R⁶, -SO³-, -OH, -SH, R⁷, -COOH, -COR⁷, -SO₂R⁷, Epoxy, Acrylat und Vinyl;
R⁴, R⁵ und R⁶ jeweils unabhängig H oder Alkyl ist;
R⁷ F, Cl oder Br ist;
q=1 bis 100; und
φ, E, R¹, R², m, n und x jeweils der Beschreibung in Anspruch 1 entsprechen,
wobei die funktionelle Gruppe 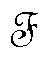 der Verbindung mit der Formel (2) mit einer funktionellen Gruppe 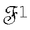 der Verbindung mit der Formel (3) reagiert.

14. Oberflächenmodifizierte Pigmentpartikel nach einem der Ansprüche 1 bis 13, wobei das Pigment C.I. Pigment Black 7 ist.

15. Oberflächenmodifizierte Pigmentpartikel nach einem der Ansprüche 1 bis 14, wobei die Modifizierungsverbindung M bezogen auf das Gewicht der oberflächenmodifizierten Partikel in einer Menge zwischen 0,1% oder ungefähr 0,1% und 95% oder ungefähr 95% vorliegt.

16. Oberflächenmodifizierte Pigmentpartikel nach einem der Ansprüche 1 bis 15, wobei die Pigmentpartikel einen mittleren gewichteten Durchmesser zwischen 10 nm und 5 µm aufweisen.

17. Pigmentdispersionszusammensetzung, die die oberflächenmodifizierten Pigmentpartikel nach einem der Ansprüche 1 bis 16 umfasst.

18. Dispersionszusammensetzung nach Anspruch 17, die ferner eins oder mehrere aus Folgendem umfasst: polares Lösungsmittel, unpolares Lösungsmittel, zusätzliches organisches Pigment, zusätzliches anorganisches Pigment, Tensid, Synergist, Zusatzstoff zur Steuerung der elektrischen Leitfähigkeit, polymeres Dispergiermittel, Weichmacher, Harz, Entschäumer und Mittel zur Ladungssteuerung sowie jede beliebige Kombination daraus.

19. Dispersionszusammensetzung nach Anspruch 18, wobei das polare Lösungsmittel ausgewählt ist aus Wasser, einem Glycol, einem Polyglycol, einem Alkohol, einem Polyol, einem Ether, einem Ester, einem Keton, einem Lactam, einem Pyrrolidon, einem Carbonat, einem Sulfon, einem Sulfoxid, einem Amid, einem heterocyclischen Amin, einem Nitril, einem Acetal einer aliphatischen Säure, einem Carbamat, einem Aldehyd und einem Chlorkohlenwasserstoff und jeder beliebigen Kombination daraus, oder
das polare Lösungsmittel eine Kombination aus funktionellen Gruppen umfasst, die ausgewählt sind aus Alkohol, Keton, Ether, Ester, Amin, Nitril, Amid, Sulfoxid, Carbonsäure, Aldehyd und Halogen, oder
das polare Lösungsmittel ausgewählt ist aus Wasser, Ethylenglycol, 1,2-Propylenglycol, 1,3-Propylenglycol, 1,4-Butylenglycol, Diethylenglycol, Dipropylenglycol, Glycerin, Ethylencarbonat, Propylencarbonat, 1,2-Butylencarbonat, 1,2-Cyclohexancarbonat, Glycerincarbonat, Dimethylcarbonat, Diethylcarbonat, Acetophenon, Pyridin, Dimethylmalonat, Diacetonalkohol, Hydroxypropylcarbamat, Beta-Hydroxyethylcarbamat, N-Methylformamid, N-Methylacetamid, Dimethylsulfoxid, Sulfolan, 2-Pyrrolidon, N-Methyl-2-pyrrolidon, N-Cyclohexyl-2-pyrrolidon, Acetonylaceton, Cyclohexanon, Ethylacetoacetat, Ethyl-L-lactat, Pyrrol, N-Methylpyrrol, N-Ethylpyrrol, 4*H*-Pyran-4-on, 1,3-Dimethyl-2-imidazolidinon, Morpholin, N-Methylmorpholin, N-Ethylmorpholin, N-Formylmorpholin, Betapropiolacton, Betavalerolacton, Betahexalacton, Gammabutyrolacton, Gammavalerolacton, Gammahexalacton, Gammaheptalacton, Gammaoctalacton, Gammanonalacton, Gammadecalacton, Deltavalerolacton, Deltahexalacton, Deltaheptalacton, Deltaoctalacton, Deltanonalacton, Deltadecalacton, Deltatetradecalacton und Deltaoctadecalacton sowie jeder beliebigen Kombination daraus.

20. Dispersionszusammensetzung nach Anspruch 18, wobei das unpolare Lösungsmittel ausgewählt ist aus einem von oder einer Kombination aus nicht substituierten, substituierten, unverzweigten, verzweigten und cyclischen Verbindungen, die ein oder mehrere Silicium- und/oder Germaniumatome aufweisen, aliphatischen oder aromatischen Kohlenwasserstoffen, teilweise hydrierten aromatischen Kohlenwasserstoffen, alicyclischen oder aromatischen heterocyclischen Verbindungen und Derivaten davon, die eine Halogen-, Nitro-, Nitroso-, Epoxid-, Phosphat- oder Cyanogruppe enthalten, einem Fettalkohol, einer Carbonsäure, sowie Ethern, Estern und Amiden davon, oder
das unpolare Lösungsmittel ausgewählt ist aus Decan, Dodecan, Tetradecan, Cyclohexan, Decalin, Tetralin, Octadecanol, einem Silikonöl, einem unverzweigten Siloxan, einem cyclischen Siloxan, einem verzweigten aliphatischen Kohlenwasserstoff, einem Lösungsmittel auf Erdölbasis, Kerosin, einem Testbenzin, Tetradecanepoxid und fluorierten Kohlenwasserstoffen sowie Kombinationen daraus.

21. Dispersionszusammensetzung nach einem der Ansprüche 17 bis 20, wobei die Menge an oberflächenmodifiziertem Pigment bezogen auf das Gewicht der Dispersionszusammensetzung in einer Menge zwischen 1% und 60% vorliegt, oder
die Menge an oberflächenmodifiziertem Pigment bezogen auf das Gewicht der Dispersionszusammensetzung in einer Menge zwischen 5% und 30% vorliegt.

22. Dispersionszusammensetzung nach einem der Ansprüche 17 bis 21 mit einer dynamischen Viskosität zwischen 0,5 cP oder ungefähr 0,5 cP und 2000 cP oder ungefähr 2000 cP bei 25°C bei einer Drehzahl von 30 U/min.

23. Verwendung der oberflächenmodifizierten Pigmentpartikel nach einem der Ansprüche 1 bis 16 oder einer Dispersion nach einem der Ansprüche 17 bis 22 zur Herstellung eines Farbfilters, eines flüssigen Toners, einer Druckfarbe, einer Beschichtung, eines Anstrichmittels, eines kosmetischen Mittels, eines Kunststoffs oder einer Farbbilderzeugungsflüssigkeit für eine elektronische Anzeige, wobei die Druckfarbe vorzugsweise eine Tintenstrahl-Druckfarbe ist.

24. Farbbilderzeugungsflüssigkeit für elektronische Anzeigen nach dem Prinzip der Elektrobenetzung und/oder Elektrophorese, die die oberflächenmodifizierten Pigmentpartikel nach einem der Ansprüche 1 bis 16 oder die Dispersion nach einem der Ansprüche 17 bis 22 umfasst, wobei die Menge an oberflächenmodifizierten Pigmentpartikeln im Bereich von 0,01 Gewichts-% oder ungefähr 0,01 Gewichts-% bis 30% oder ungefähr 30 Gewichts-% der Farbbilderzeugungsflüssigkeit liegt, oder
wobei die Menge an oberflächenmodifizierten Pigmentpartikeln im Bereich von 0,2 Gewichts-% oder ungefähr 0,2 Gewichts-% bis 20% oder ungefähr 20 Gewichts-% der Farbbilderzeugungsflüssigkeit liegt.

25. Farbbilderzeugungsflüssigkeit nach Anspruch 24, wobei die oberflächenmodifizierten Pigmentpartikel einen mittleren gewichteten Durchmesser zwischen 10 nm oder ungefähr 10 nm und 5 µm oder ungefähr 5 µm, oder zwischen 20 nm oder ungefähr 20 nm und 500 nm oder ungefähr 500 nm, oder zwischen 30 nm oder ungefähr 30 nm und 300 nm oder ungefähr 300 nm aufweisen.

26. Farbbilderzeugungsflüssigkeit nach Anspruch 24 oder 25 mit einer dynamischen Viskosität zwischen 0,5 cP oder ungefähr 0,5 cP und 2000 cP oder ungefähr 2000 cP bei 25 °C, gemessen bei einer Drehzahl von 30 U/min.

27. Elektronische Anzeige oder elektronische Einheit, die nach dem Prinzip der Elektrobenetzung, Elektrofluidik und/oder Elektrophorese arbeitet, wobei die Einheit die oberflächenmodifizierten Pigmentpartikel nach einem der Ansprüche 1 bis 16 oder die Bilderzeugungsflüssigkeit nach einem der Ansprüche 24 bis 26 umfasst.

28. Kosmetische Zusammensetzung, die die oberflächenmodifizierten Pigmentpartikel nach einem der Ansprüche 1 bis 16 oder die Dispersion nach einem der Ansprüche 17 bis 22 umfasst.

29. Druckfarbe oder Beschichtung, die die oberflächenmodifizierten Pigmentpartikel nach einem der Ansprüche 1 bis 16 oder die Dispersion nach einem der Ansprüche 17 bis 22 umfasst.

30. Druckfarbe nach Anspruch 29, die eine Tintenstrahl-Druckfarbe ist.

## Revendications

1. Particules de pigment de type noir de carbone modifiées en surface, comprenant :
une surface sur les particules de pigment de type noir de carbone contenant un groupe fonctionnel **Q** ; et
un composé modificateur **M** lié à la surface par l'intermédiaire de liaisons hydrogène ou par l'intermédiaire d'une liaison covalente avec le groupe fonctionnel **Q** pour former le groupe **-Q-M** sur la surface ;
dans lesquelles :
le composé modificateur **M** comprend un produit formé par une hydrolyse totale ou partielle d'un composé de formule (1) : 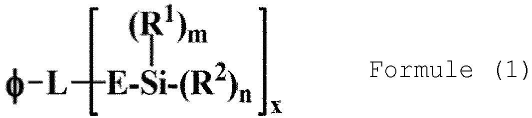 dans laquelle :
**φ** est une chaîne polymère linéaire, ramifiée ou dendritique ayant une masse moléculaire d'environ 100 à environ 5 000 000 ;
**L** est un groupe -NR³C(O)NH-, -OC(O)NH-, -C(O)OCH₂CH(OH)CH₂-, -OCH₂CH(OH)CH₂-, -NHCH₂CH(OH)CH₂-, -alkylène-, -C(O)O-, -C(O)NR³-, -SO₂NR³-, -SO₂-, -NR³-, =N-, =N⁺-, -O- ou -S- ;
chaque **E** est indépendamment un groupe alkylène, arylène, alkylarylène, arylalkylène, alkylèneamino, alkylèneimino, alkylèneoxyalkylène, arylèneoxy, arylèneoxyalkylène, oxaalkylène, oxyalkylène, dioxyalkylène ou oxyarylène ;
chaque **R¹** est indépendamment H ou un groupe hydroxyle, oxyalkyle, oxyalkylènearyle, halogéno, acétate ou aminé ;
chaque **R²** est indépendamment un groupe alkyle, cycloalkyle, hétérocycloalkyle, aryle ou alkylènearyle ;
**R³** est H ou un groupe alkyle, aryle ou alkylaryle ;
**m** = 1 à 3 ;
**n** = 0 à 2 ;
**m + n** = 3 ; et
**x** = 1 ou 2.

2. Particules de pigment modifiées en surface selon la revendication 1, dans lesquelles la surface comprend une pluralité de groupes fonctionnels **Q** qui sont identiques ou qui sont différents.

3. Particules de pigment modifiées en surface selon la revendication 1 ou 2, dans lesquelles le groupe fonctionnel **Q** est choisi entre un groupe hydroxyle, un groupe phénolique, un groupe thiol et un groupe thiophénolique.

4. Particules de pigment modifiées en surface selon l'une quelconque des revendications 1 à 3, dans lesquelles **-Q-M** répond à la formule suivante : 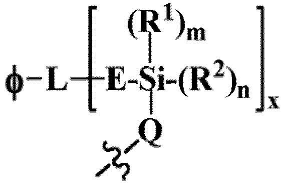 dans laquelle :
chaque **Q** est indépendamment un groupe O, oxyalkylène, S, thioalkylène, oxyarylène, thioarylène, oxyhétérocyclylène, thiohétérocyclylène, oxyalicyclylène ou thioalicyclylène ;
**m** vaut 1 ou 2 ;
**n** vaut 0 ou 1 ;
**m + n** = 2 ;
**φ, L, E, R¹, R²** et **x** sont tels que définis dans la revendication 1 ; et
chaque **R¹** peut indépendamment interagir avec un groupe fonctionnel **Q** différent sur la surface des particules de pigment ou avec un substituant **R¹** d' un autre composé modificateur **M.**

5. Particules de pigment modifiées en surface selon l'une quelconque des revendications 1 à 3, dans lesquelles le composé modificateur **M** interagit avec deux groupes fonctionnels **Q** sur la surface des particules de pigment pour former la fraction **-Q-M-Q-** répondant à l'une des formules suivantes ou à une combinaison de celles-ci : 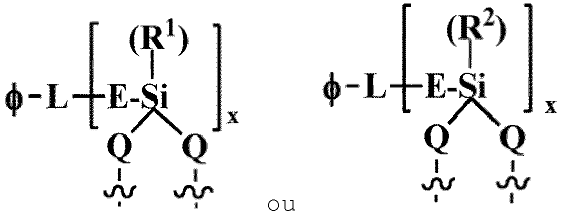 dans lesquelles :
chaque **Q** est indépendamment un groupe O, oxyalkylène, S, thioalkylène, oxyarylène, thioarylène, oxyhétérocyclylène, thiohétérocyclylène, oxyalicyclylène ou thioalicyclylène ;
chaque **R¹** peut interagir avec un groupe fonctionnel **Q** différent sur la surface des particules de pigment ou avec un substituant **R¹** d'un autre composé modificateur **M** ; et
**φ, L, E, R¹, R²** et **x** sont tels que définis dans la revendication 1.

6. Particules de pigment modifiées en surface selon l'une quelconque des revendications 1 à 3, dans lesquelles au moins deux composés modificateurs **M** interagissent les uns avec les autres et interagissent avec des groupes fonctionnels **Q** différents sur la surface des particules de pigment pour former la fraction **-Q-M-M-Q-**.

7. Particules de pigment modifiées en surface selon la revendication 6, dans lesquelles la fraction **-Q-M-M-Q-**répond à la formule suivante : 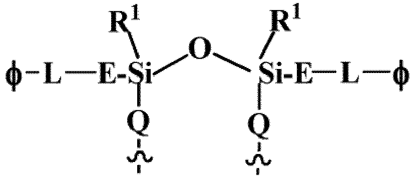 dans laquelle :
chaque **Q** est indépendamment un groupe O, oxyalkylène, S, thioalkylène, oxyarylène, thioarylène, oxyhétérocyclylène, thiohétérocyclylène, oxyalicyclylène ou thioalicyclylène ;
**φ**, **L**, **E** et **R¹** sont tels que décrits dans la revendication 1 ; et
chaque **R¹** peut interagir avec un groupe fonctionnel **Q** différent sur la surface des particules de pigment ou avec un substituant **R¹** d'un autre composé modificateur **M.**

8. Particules de pigment modifiées en surface selon l'une quelconque des revendications 1 à 7, dans lesquelles le groupe fonctionnel **Q** est attaché à la surface par une liaison covalente, ionique ou hydrogène.

9. Particules de pigment modifiées en surface selon l'une quelconque des revendications 1 à 7, dans lesquelles le groupe fonctionnel **Q** est attaché à la surface par l'intermédiaire d'une adsorption irréversible sur la surface.

10. Particules de pigment modifié en surface selon l'une quelconque des revendications 1 à 9, dans lequel **φ** a une masse moléculaire d'environ 1 000 à environ 100 000.

11. Particules de pigment modifié en surface selon l'une quelconque des revendications 1 à 10, dans lequel **φ** est choisi entre un polyalkylène, un polyoxyalkylène, une polyimine, un polyester, un polyamide, un polyimide, un polyuréthane, une polyurée, un polyacrylate, un polyacrylonitrile, une polysulfone, un polystyrène, un poly(halogénure de vinyle), un poly(halogénure de vinylidène), un poly(alcool vinylique), un poly(acétate de vinyle), une polyvinylpyrrolidone, un poly(butyral de vinyle), un polycarbonate, une polyéthersulfone, un poly(sulfure d'arylène/alkylène), un polyépoxyde, un polyaldéhyde, une polycétone, une polyéthercétone, une résine de phénol-formaldéhyde, un poly(téréphtalate d'éthylène), un poly(téréphtalate de butylène), une résine hydrocarbonée et un polymère organométallique contenant au moins un atome de silicium et/ou de germanium et un copolymère statistique, séquencé, dendritique ou de combinaison de ceux-ci.

12. Particules de pigment modifié en surface selon l'une quelconque des revendications 1 à 11, dans lequel **φ** est choisi parmi des chaînes polyéthylène, polypropylène, polybutylène, polyisobutylène, polyisoprène, polyacétal, polyéthylèneglycol, polypropylèneglycol, polybutylèneglycol, polyméthacrylate, poly(acrylate d'alkyle/aryle), poly(chlorure de vinyle), poly(fluorure de vinyle), poly(brome de vinyle), polysiloxane ; ou un copolymère statistique, séquencé, dendritique ou de combinaison de celles-ci.

13. Particules de pigment modifiées en surface selon l'une quelconque des revendications 1 à 12, dans lesquelles le composé de formule (1) est le produit réactionnel d'un composé de formule (2) : 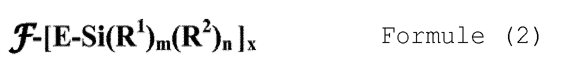 avec un composé de formule (3) 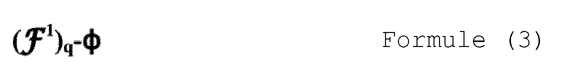 dans lesquelles :
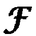 est choisi parmi les groupes -NCO, -NR⁴R⁵, -N⁺R⁴R⁵R⁶, -SO³-, -OH, -SH, R⁷, -COOH, -COR⁷, -SO₂R⁷, époxy, acrylate et vinyle ;
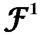 est choisi parmi les groupes -NCO, -NR⁴R⁵, -N⁺R⁴R⁵R⁶, -SO³⁻, -OH, -SH, R⁷, -COOH, -COR⁷, -SO₂R⁷, époxy, acrylate et vinyle ;
chacun de **R⁴, R⁵** et **R⁶** est indépendamment H ou un groupe alkyle ;
**R⁷** est F, Cl ou Br ;
**q** = 1 à 100 ; et
chacun de **φ, E, R¹, R²**, **m**, **n** et **x** est tel que décrit dans la revendication 1,
le groupe fonctionnel 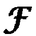 du composé de formule (2) réagissant avec un groupe fonctionnel 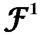 du composé de formule (3).

14. Particules de pigment modifiées en surface selon l'une quelconque des revendications 1 à 13, dans lesquelles le pigment est le C.I. pigment noir 7.

15. Particules de pigment modifiées en surface selon l'une quelconque des revendications 1 à 14, dans lesquelles le composé modificateur **M** est présent en une quantité de 0,1 % ou environ 0,1 % à 95 % ou environ 95 % par rapport au poids des particules modifiées en surface.

16. Particules de pigment modifiées en surface selon l'une quelconque des revendications 1 à 15, les particules de pigment ayant un diamètre moyen pondéré de 10 nm à 5 µm.

17. Composition de dispersion de pigment, comprenant les particules de pigment modifiées en surface selon l'une quelconque des revendications 1 à 16.

18. Composition de dispersion selon la revendication 17, comprenant en outre un ou plusieurs composants parmi un solvant polaire, un solvant non polaire, un pigment organique supplémentaire, un pigment inorganique supplémentaire, un tensioactif, un agent de synergie, un additif pour l'ajustement de la conductivité électrique, un dispersant polymère, un plastifiant, une résine, un antimousse et un agent directeur de charge et une quelconque association de ceux-ci.

19. Composition de dispersion selon la revendication 18, dans laquelle le solvant polaire est choisi entre l'eau, un glycol, un polyglycol, un alcool, un polyol, un éther, un ester, une cétone, un lactame, une pyrrolidone, un carbonate, une sulfone, un sulfoxyde, un amide, une amine hétérocyclique, un nitrile, un acétal d'acide aliphatique, un carbamate, un aldéhyde et un hydrocarbure chloré et une quelconque association de ceux-ci, ou
le solvant polaire comprend une combinaison de fonctions choisies parmi les fonctions alcool, cétone, éther, ester, amine, nitrile, amide, sulfoxyde, acide carboxylique, aldéhyde et halogéno, ou
le solvant polaire est choisi entre l'eau, l'éthylèneglycol, le 1,2-propylèneglycol, le 1,3-propylèneglycol, le 1,4-butylèneglycol, le diéthylèneglycol, le dipropylèneglycol, la glycérine, le carbonate d'éthylène, le carbonate de propylène, le 1,2-carbonate de butylène, le 1,2-carbonate de cyclohexane, le carbonate de glycérine, le carbonate de diméthyle, le carbonate de diéthyle, l'acétophénone, la pyridine, le malonate de diméthyle, le diacétone-alcool, le carbamate d'hydroxypropyle, le carbamate de bêta-hydroxyéthyle, le *N*-méthylformamide, le *N*-méthylacétamide, le diméthylsulfoxyde, le sulfolane, la 2-pyrrolidone, la *N-*méthyl-2-pyrrolidone, la *N*-cyclohexyl-2-pyrrolidone, l'acétonylacétone, la cyclohexanone, l'acétoacétate d'éthyle, le *L*-lactate d'éthyle, le pyrrole, le *N-*méthylpyrrole, le *N*-éthylpyrrole, la 4*H*-pyran-4-one, la 1,3-diméthyl-2-imidazolidinone, la morpholine, la *N-*méthylmorpholine, la N-éthylmorpholine, la N-formylmorpholine, la bêta-propiolactone, la bêta-valérolactone, la bêta-hexalactone, la gamma-butyrolactone, la gamma-valérolactone, la gamma-hexalactone, la gamma-heptalactone, la gamma-octalactone, la gamma-nonalactone, la gamma-décalactone, la delta-valérolactone, la delta-hexalactone, la delta-heptalactone, la delta-octalactone, la delta-nonalactone, la delta-décalactone, la delta-tétradécalactone et la delta-octadécalactone et une quelconque association de ceux-ci.

20. Composition de dispersion selon la revendication 18, dans laquelle le solvant non polaire en est un choisi parmi les composés linéaires, ramifiés et cycliques non substitués ou substitués comprenant un ou plusieurs atomes de silicium et/ou de germanium, les hydrocarbures aliphatiques ou aromatiques, les hydrocarbures aromatiques partiellement hydrogénés, les composés hétérocycliques alicycliques ou aromatiques et les dérivés de ceux-ci contenant un groupe halogéno, nitro, nitroso, époxy, phosphate ou cyano, un alcool gras, un acide carboxylique et les éthers, esters et amides de ceux-ci ou une association de ceux-ci, ou
le solvant non polaire est choisi entre le décane, le dodécane, le tétradécane, le cyclohexane, la décaline, la tétraline, l'octadécanol, une huile de silicone, un siloxane linéaire, un siloxane cyclique, un hydrocarbure aliphatique ramifié, un solvant pétrolier, le kérosène, une essence minérale, un époxyde de tétradécane et les hydrocarbures fluorés et les associations de ceux-ci.

21. Composition de dispersion selon l'une quelconque des revendications 17 à 20, dans laquelle la quantité de pigment modifié en surface est une quantité de 1 % à 60 % par rapport au poids de la composition de dispersion, ou
la quantité de pigment modifié en surface est une quantité de 5 % à 30 % par rapport au poids de la composition de dispersion.

22. Composition de dispersion selon l'une quelconque des revendications 17 à 21 ayant une viscosité dynamique de 0,5 cP ou environ 0,5 cP à 2 000 cP ou environ 2 000 cP à 25°C à une vitesse de rotation de 30 tr/min.

23. Utilisation des particules de pigment modifiées en surface selon l'une quelconque des revendications 1 à 16 ou d'une dispersion selon l'une quelconque des revendications 17 à 22 pour la préparation d'un filtre coloré, d'un toner liquide, d'une encre, d'un revêtement, d'une peinture, d'un produit cosmétique, d'un plastique ou d'un fluide d'imagerie en couleur pour un écran électronique, l'encre étant de préférence une encre pour jet d'encre.

24. Fluide d'imagerie en couleur pour des écrans électroniques à électromouillage et/ou électrophorèse, comprenant les particules de pigment modifiées en surface selon l'une quelconque des revendications 1 à 16 ou la dispersion selon l'une quelconque des revendications 17 à 22, dans lequel la quantité de particules de pigment modifiées en surface est dans la plage de 0,01 % ou environ 0,01 % à 30 % ou environ 30 % en poids par rapport au poids du fluide d'imagerie en couleur, ou
dans lequel la quantité de particules de pigment modifiées en surface est dans la plage de 0,2 % ou environ 0,2 % à 20 % ou environ 20 % en poids par rapport au poids du fluide d'imagerie en couleur.

25. Fluide d'imagerie en couleur selon la revendication 24, dans lequel les particules de pigment modifiées en surface ont un diamètre moyen pondéré de 10 nm ou environ 10 nm à 5 µm ou environ 5 µm, ou de 20 nm ou environ 20 nm à 500 nm ou environ 500 nm, ou de 30 nm ou environ 30 nm à 300 nm ou environ 300 nm.

26. Fluide d'imagerie en couleur selon la revendication 24 ou 25 ayant une viscosité dynamique de 0,5 cP ou environ 0,5 cP à 2 000 cP ou environ 2 000 cP à 25°C mesurée à une vitesse de rotation de 30 tr/min.

27. Écran électronique ou dispositif électronique qui fonctionne par des principes d'électromouillage, d'électrofluidique et/ou d'électrophorèse, le dispositif comprenant les particules de pigment modifiées en surface selon l'une quelconque des revendications 1 à 16 ou le fluide d'imagerie selon l'une quelconque des revendications 24 à 26.

28. Composition cosmétique, comprenant les particules de pigment modifiées en surface selon l'une quelconque des revendications 1 à 16 ou la dispersion selon l'une quelconque des revendications 17 à 22.

29. Encre ou revêtement, comprenant les particules de pigment modifiées en surface selon l'une quelconque des revendications 1 à 16 ou la dispersion selon l'une quelconque des revendications 17 à 22.

30. Encre selon la revendication 29 qui est une encre pour jet d'encre.
